# EUROPÄISCHE PATENTSCHRIFT

(11) **EP 3 058 250 B1**
(45) Veröffentlichungstag und Bekanntmachung des Hinweises auf die Patenterteilung: **15.08.2018**
(21) Anmeldenummer: 14771268.1
(22) Anmeldetag: 17.09.2014
(51) Int. Cl.: F16H 61/02

(54) **HYDRAULISCHE STEUERUNGSVORRICHTUNG FÜR EIN AUTOMATIKGETRIEBE**
HYDRAULIC CONTROL DEVICE FOR AN AUTOMATIC TRANSMISSION
DISPOSITIF DE COMMANDE HYDRAULIQUE POUR TRANSMISSION AUTOMATIQUE

(30) Priorität: 17.10.2013 DE 102013221035
(43) Veröffentlichungstag der Anmeldung: 24.08.2016
(73) Patentinhaber: ZF Friedrichshafen AG, 88046 Friedrichshafen (DE)
(72) Erfinder: BECK, Stefan, 88097 Eriskirch (DE); SIBLA, Christian, 88045 Friedrichshafen (DE); MARGRAF, Christoph, 88677 Markdorf (DE); ZIEMER, Peter, 88069 Tettnang (DE)
(86) Internationale Anmeldenummer: PCT/EP2014/069758
(87) Internationale Veröffentlichungsnummer: WO 2015/055366

(56) Entgegenhaltungen:
- DE-A1-102005 051 606
- DE-C1- 4 124 384
- US-A1- 2005 205 138

## Beschreibung

Die Erfindung betrifft eine hydraulische Steuerungsvorrichtung, wie bekannt aus US2005/0205138 A, nach dem Oberbegriff des Patentanspruchs 1 und ein Automatikgetriebe nach Anspruch 15.

Bei Automatikgetrieben für Kraftfahrzeuge, wie beispielsweise aus der DE 198 58 541 A1 bekannt, werden die Übersetzungsstufen durch reibschlüssige Schaltelemente, worunter nachfolgend reibschlüssige Kupplungen oder Bremsen zu verstehen sind, eingestellt. Kupplungen, welche zwei drehbare Elemente drehfest miteinander verbinden können, und Bremsen, welche ein drehbares mit einem feststehenden bzw. mit dem Getriebegehäuse drehfest verbundenen Element drehfest verbinden sind in dem offenbarten Automatikgetriebe als Lamellenschaltelemente ausgebildet. Die Betätigung der Schaltelemente erfolgt hierbei hydraulisch, d. h. über Aktuatoren in Form von Kolben/Zylinder-Einheiten, welche mit Drucköl beaufschlagt werden. Das Drucköl wird von einer motorgetriebenen Pumpe als Druckquelle gefördert und muss während der gesamten Betriebsdauer des Automatikgetriebes auf einem Druckniveau gehalten werden, welches eine zu einer Drehmomentübertragung ausreichende Anpresskraft der Lamellen im Schaltelement erzeugt. Die Energie zur Druckerzeugung mittels der Hydraulikpumpe muss vom Motor des Kraftfahrzeuges aufgebracht werden, so dass die Erzeugung der hydraulischen Leistung den Kraftstoffverbrauch und damit CO_2-Emission erhöht, bzw. durch die Leistungsverluste die für den Antrieb des Fahrzeugs bereitstehende Energie verringert. Somit sinkt auch der Getriebewirkungsgrad.

Die Schaltelemente eines Automatikgetriebes können grundsätzlich außer als reibschlüssige Lamellenschaltelemente auch als formschlüssige Schaltelemente, wie beispielsweise Klauenschaltelemente, ausgebildet sein.

Zudem entstehen an Dichtstellen wie beispielsweise Druckölzuführungen vom Getriebegehäuse über so genannte Drehölzuführungen, welche mittels Spaltdichtung, z. B. Gleitlager und / oder Rechteckringe abgedichtet sind, in die rotierende Getriebewelle Leckageverluste. Diese erfordern ein laufendes Nachführen des Öldrucks im Aktuator bei einem geschlossenen Schaltelement bzw. ein Nachspeisen der Leckagemenge, um das Schaltelement geschlossen zu halten.

Um den Druck im Aktuator vom Druck der Pumpe unabhängig zu machen und die Leckage-Verluste zu minimieren kann der Kolbenraum durch verschiedene Verriegelungsmechanismen abgesperrt werden, so dass der Druck im Kolbenraum verbleibt und nicht weiter Öl gefördert werden muss. Nur während des Schaltvorgangs wird das Ventil geöffnet und anschließend mit dem entsprechenden Druck gefüllt. Durch die DE 102 05 411 A1 der Anmelderin wurde eine hydraulische Steuerungsvorrichtung bekannt, mittels welcher bei einem bei einer gewünschten Drehmomentübertragung die durch Druckbeaufschlagung schließbaren Lamellenschaltelemente außerhalb der Schaltungen durch eine Sperreinrichtung verriegelt werden. Dadurch bleibt der Druck in dem als Aktuator wirkenden Betätigungszylinder und damit die Anpresskraft zwischen den Lamellen aufrechterhalten, ohne dass von der Getriebepumpe ein hydraulischer Druck in der Größe des Betätigungsdrucks des Schaltelements erzeugt werden muss.

Der von der Getriebepumpe zu erzeugende Druck kann somit gegenüber dem Betätigungsdruck abgesenkt werden. Obwohl theoretisch möglich, wird die Pumpe jedoch nicht ganz abgeschaltet bzw. drucklos, da auch bei geschlossenen und verriegelten Schaltelementen ein Ölbedarf auf niedrigem Druckniveau im Getriebe weiter besteht, beispielsweise für Kühlung und Schmierung oder zur Vorbefüllung von Schaltelement zur Vorbereitung eines Schaltvorganges.

Hierdurch wird die Leistungsaufnahme der Getriebeölpumpe, welche sich als Produkt aus gefördertem Volumenstrom und erzeugter Druckdifferenz errechnet, deutlich reduziert. Mit einer geringeren Leistungsaufnahme der Getriebepumpe erhöht sich der Gesamtwirkungsgrad des Getriebes, da weniger Motorleistung für die Hydraulik abgezweigt werden muss und für den Fahrzeugantrieb zur Verfügung steht. Eine in diesem Stand der Technik offenbarte Sperreinrichtung ist als Absperrventil ausgebildet, welches im Zufuhrbereich des Hydraulikzylinders angeordnet ist und den Druckraum des Zylinders zur Pumpe hin dicht abgesperrt, so dass der zur Aufrechterhaltung des Anpressdruckes im Lamellenpaket erforderliche hydraulische Druck aufrechterhalten wird

Das Problem bei der bestehenden Lösung ist, dass pro Schaltelement ein Ventil notwendig ist, das den Druck im jeweiligen Kolbenraum, nachfolgend auch als Betätigungsdruckraum bezeichnet, einschließt. Nachteilig daran ist zum einen, dass der Steuerdruck an mehrere verschiedene Stellen im Getriebe gebracht werden muss, zum anderen ist auch die Fehlermöglichkeit deutlich höher, da jedes einzelne Ventil verklemmen o.ä. kann. Hierdurch wird nachteiligerweise die Funktionssicherheit des Automatikgetriebes beeinträchtigt, da es in besonderen Fällen, wie beispielsweise bei einem Motorstillstand, zum Blockieren des Automatikgetriebes kommen kann. Ebenso ist damit das Automatikgetriebe gegen eine Abschleppbewegung blockiert. Um trotzdem die Funktionssicherheit zu garantieren bzw. Stellungsfehler zu erkennen, würden für jedes Schaltelement Positionssensoren notwendig werden. Zudem wird durch eine große Anzahl von Absperrventilen die Teilezahl erhöht. Dies bedeutet einen hohen Aufwand an Montagevorgängen, Bauraum und Kosten.

Die der Erfindung zugrunde liegende Aufgabe ist die Schaffung einer hydraulischen Steuerungseinrichtung, mittels welcher in einfacher und funktionssicherer Weise der Betätigungsdruckraum eines hydraulisch betätigbaren Schaltelements dicht abgeschlossen oder zu dem Hydrauliksystem hin geöffnet werden kann.

Diese Aufgabe wird durch die Merkmale des Patentanspruchs 1 gelöst.

In einer hydraulischen Steuerungsvorrichtung zur Ansteuerung von mehreren Schaltelementen zur Drehmomentübertragung in einem Automatikgetriebes, weisen die Schaltelemente jeweils einen hydraulischen Aktuator auf, welcher einen Betätigungsdruckraum umfasst, mittels dessen Druckbeaufschlagung aus der hydraulischen Steuerungsvorrichtung die Schaltelemente betätigbar sind. Die hydraulische Steuerungsvorrichtung umfasst mindestens ein schaltbares Absperrventil und mindestens ein hydraulisches Schaltgerät mit mehreren, den unterschiedlichen Schaltelementen zugeordneten Druckstelleinrichtungen. Das hydraulische Schaltgerät ist zu seiner Druckmittelversorgung mit einer Druckquelle verbunden. Das Absperrventil ist in zwei Schaltstellungen schaltbar, wobei in einer ersten Schaltstellung der Betätigungsdruckraum mindestens eines Schaltelements dicht verschlossen ist, so dass ein in dem Betätigungsdruckraum eingeschlossener Betätigungsdruck seinen Wert unabhängig von dem Druck der Druckquelle im Wesentlichen beibehält.

Erfindungsgemäß ist das Absperrventil derart ausgebildet und angeordnet, dass die Aktuatoren von mindestens zwei Schaltelementen durch ein gemeinsames Absperrventil hydraulisch mit den Druckstelleinrichtungen verbindbar sind, wobei in einer ersten Schaltstellung des Absperrventils alle Betätigungsdruckräume der mindestens zwei Schaltelemente von dem Absperrventil dicht verschlossen sind. In einer zweiten Schaltstellung des Absperrventils sind alle Betätigungsdruckräume der mindestens zwei Schaltelemente durch das Absperrventil mit der dem jeweiligen Schaltelement zugeordneten Druckstelleinrichtung verbunden.

Ein gemeinsames Absperrventil für mehrere Schaltelemente hat gegenüber einer Lösung, bei welcher jedem Schaltelement ein Absperrventil zugeordnet ist den Vorteil, dass kein Fehler aufgrund Klemmens eines einzelnen Ventils vorkommen kann. Alle dem Absperrventil zugeordneten Druckräume werden gleichzeitig geöffnet oder geschlossen. Beim Öffnen eines zentralen Absperrventils ist sichergestellt, dass in keinem Betätigungsdruckraum mehr ein Betätigungsdruck eingeschlossen und gegebenenfalls damit ein Schaltelement noch geschlossen ist, was beispielsweise zum Blockieren des Automatikgetriebes führen könnte. Hierdurch ist eine höhere Funktionssicherheit gegeben. Außerdem muss bei einem gemeinsamen Absperrventil eine Betätigungsenergie nicht an verschiedenen Stellen des Getriebes gebracht werden wie bei einzelnen Absperrventilen. Hierdurch wird der bauliche Aufwand und damit die Kosten reduziert, den einzeln zugeordnete Absperrventile, verursachen, zudem diese jedes für sich die gleiche Anzahl von Elementen umfasst wie das erfindungsgemäße gemeinsame Absperrventil.

Vorteilhafte Ausgestaltungen der Erfindung ergeben sich aus den Unteransprüchen.

Vorteilhafterweise ist es möglich, dass die Aktuatoren aller Schaltelemente durch ein gemeinsames Absperrventil hydraulisch mit den Druckstelleinrichtungen verbindbar sind. Hierdurch wird ein Minimum an Teilezahl sowie Montageaufwand erreicht.

Bevorzugt sind die Schaltelemente so ausgebildet, dass diese mittels einer Druckbeaufschlagung des Betätigungsdruckraumes geschlossen werden, wodurch ein Drehmoment über das Schaltelement übertragbar ist. Ein druckloses Schaltelement ist geöffnet und kann kein Drehmoment übertragen. Der Zustand "drucklos geöffnet" wird auch als "normally opened" bezeichnet.

Alternativ hierzu können Schaltelemente auch so ausgebildet sein, dass diese bei einem drucklosen Betätigungsdruckraum mittels der Kraft einer Feder geschlossen und mittels einer Druckbeaufschlagung des Betätigungsdruckraums geöffnet werden. Ein Schaltelement mit einer solchen Funktionsweise wird auch als "normally closed" bezeichnet.

Es ist möglich, dass in einem Automatikgetriebe einige Schaltelemente "normally closed" und ein anderer Teil der Schaltelement "normally opened" ausgebildet sind. Die unterschiedlichen Schaltelementbauweisen sind so auf die Schaltelemente zu verteilen, dass die Funktionssicherheit des Automatikgetriebes bei Ausfall der Druckquelle gegeben ist.

In einer Ausgestaltung der Erfindung umfasst das Absperrventil einen Verschlusskörper und einen Gehäusekörper, wobei der Verschlusskörper innerhalb des Gehäusekörpers angeordnet ist. Der Gehäusekörper weist mindestens einen Anschluss zu jedem Aktuator der mindestens zwei Schaltelemente und mindestens einen Anschluss zu der Druckstelleinrichtung auf, welche dem jeweiligen der mindestens zwei Schaltelemente zugeordnet ist. Der Verschlusskörper ist hierbei mittels einer Wirkenergie relativ zum Gehäusekörper in eine erste und eine zweite Stellung bewegbar ist, wobei in der ersten Stellung jeder der an dem Absperrventil angeschlossenen Aktuatoren verschlossen ist. In der zweiten Stellung des Verschlusskörpers sind die Aktuatoren der mindestens zwei Schaltelemente durch den Verschlusskörper jeweils mit der dem jeweiligen Schaltelement zugeordneten Druckstelleinrichtung verbunden. Hierbei sind die einzelnen Aktuatoren bzw. deren Betätigungsdruckräume immer voneinander getrennt und werden jeder für sich von der Druckstelleinrichtung mit einem Druckmedium, insbesondere Öl, befüllt bzw. mit Druck beaufschlagt.

In einer vorteilhaften Ausgestaltung weist der Gehäusekörper einen Steuerdruckanschluss auf und die Wirkenergie zum Bewegen des Verschlusskörpers in eine der beiden Stellungen ist ein den Verschlusskörper beaufschlagender hydraulischer Steuerdruck. Dieser ist von dem hydraulischen Schaltgerät einstellbarer und wird durch den Steuerdruckanschluss zu dem Verschlusskörper geführt. Die Wirkenergie zum Bewegen des Verschlusskörpers in die andere der beiden Stellungen ist eine Vorspannkraft einer Feder, bei einem mittels des hydraulischen Schaltgeräts entsprechend abgesenkten Steuerdruck. Dieser ist soweit abzusenken, dass dessen Druckkraft kleiner ist als die Kraft der Feder. Eine solche hydraulische Betätigung des Absperrventils hat den Vorteil, dass die in dem Automatikgetriebe bzw. der hydraulischen Steuerungsvorrichtung ohnehin zur Betätigung der Schaltelemente vorhandene hydraulische Energie zur Verstellung des Ventils genutzt werden kann. Es entsteht kein zusätzlicher Aufwand in Form einer anderen zu installierenden Wirkenergie.

Es ist möglich, dass die Feder als Druckfeder, Zugfeder, Tellerfeder, Schraubenfeder oder Wellfeder ausgebildet ist.

Alternativ hierzu wäre es denkbar, dass die Wirkenergie pneumatisch oder elektrisch ist. Bei einer elektrischen Wirkenergie kann der Verschlusskörper mittels beidseitig des Verschlusskörpers angeordneter elektromechanischer Aktuatoren, oder mittels eines auf einer Seite des Verschlusskörpers angeordneten elektromechanischen Aktuators und einer auf der Gegenseite angeordneten Druckfeder in die beiden Stellungen bewegt werden.

Eine vorteilhafte Ausgestaltung hiervon zeigt, dass der Verschlusskörper unter der Wirkung des Steuerdrucks in die zweite Stellung, in welcher die Betätigungsdruckräume der mindestens zwei Schaltelemente geöffnet sind, bewegbar ist. Unter der Wirkung der Vorspannkraft der Feder ist, bei einem entsprechend abgesenkten Steuerdruck oder einem drucklosen Hydrauliksystem bzw. druckloser Druckquelle wie beispielsweise bei abgestelltem Motor eines Fahrzeugs, der Verschlusskörper in die erste Stellung verschiebbar, in welcher die Betätigungsdruckräume der Aktuatoren der mindestens zwei Schaltelemente verschlossen sind. Diese Auslegung eines Ventils wird auch als "normally closed" bezeichnet. Sind die Schaltelemente derart ausgebildet, dass diese unter dem Betätigungsdruck geschlossen sind und damit ein Drehmoment übertragen können, so bleibt bei stehendem Motor, wie beispielsweise im Start-Stopp-Betrieb, die eingelegte Übersetzungsstufe erhalten und es kann eine spontanere Inbetriebnahme beim neuerlichen Anlassen des Motors erfolgen.

Alternativ hierzu ist es möglich, dass der Verschlusskörper unter der Wirkung des Steuerdrucks in die erste Stellung, in welcher die Betätigungsdruckräume geschlossen sind, und unter der Wirkung der Vorspannkraft der Druckfeder, bei einem entsprechend abgesenkten Steuerdruck bzw. bei einer drucklosen Druckquelle wie beispielsweise einer stehenden Pumpe, in die zweite Stellung bewegbar ist, in welcher die Betätigungsdruckräume geöffnet sind. Diese Auslegung eines Ventils wird auch als "normally opened" bezeichnet. Sind die Schaltelemente so ausgebildet, dass diese unter Druck geschlossen sind, so öffnen sich diese nun bei einem beispielsweise ausfallbedingtem Motorstillstand und es ist vorteilhafterweise funktionssicher ausgeschlossen, dass das Automatikgetriebe blockiert, da bei drucklos geöffneten Schaltelementen kein Kraftschluss zwischen Abtrieb und Antrieb besteht. Vorzugsweise ist der Verschlusskörper als ein zylindrischer Kolbenschieber ausgebildet, welcher verschiebbar innerhalb des Gehäusekörpers angeordnet ist. Ein zylindrischer Kolbenschieber ist ein in der Hydraulik weit verbreitetes Bauteil. Da bei dessen Fertigung nur eine Außenkontur zu bearbeiten ist, ist dieser vorteilhafterweise einfach herstellbar.

In einer bevorzugten Ausgestaltung der Erfindung ist der Gehäusekörper hierbei eine Welle des Getriebes.

Alternativ hierzu ist es möglich, dass der Verschlusskörper als hohlzylindrischer Hülsenschieber ausgebildet ist und dass der Gehäusekörper aus einer Welle des Getriebes und einem die Welle konzentrisch umschließenden Getriebegehäuseteil besteht. Der Hülsenschieber ist hierbei konzentrisch zur Welle und damit auch zu dem Gehäuseteil zwischen beiden relativ zu diesen axial verschiebbar angeordnet ist. Durch die Anordnung des Hülsenschiebers um die Welle herum steht innerhalb der Welle genügend Bauraum zur Anordnung von Ölkanälen oder Ventileinrichtungen, wie beispielsweise einem weiteren Absperrventil für mindestens ein weiteres Schaltelement zur Verfügung.

In einer besonderen Ausgestaltung dieser Alternative sind die Anschlüsse für die Aktuatoren in dem die Welle konzentrisch umschließenden Getriebegehäuseteil und die Anschlüsse zu dem hydraulischen Schaltgerät bzw. zu den Druckstelleinrichtungen in der Welle ausgebildet.

In einer weiteren alternativen Ausgestaltung der Erfindung ist vorgesehen, dass der Verschlusskörper mehrere mit einem Steuerkolben verbundene und durch diesen bewegbare Stößel umfasst, welche axial verschiebbar innerhalb des Gehäusekörpers angeordnet sind, wobei die Anzahl der Stößel mindestens der Anzahl der angeschlossenen Aktuatoren entspricht.

Bevorzugt ist es bei dieser Ausgestaltung möglich, dass der Gehäusekörper eine Welle des Getriebes ist und dass die Anschlüsse der Aktuatoren in der Welle axial bezüglich einer Wellenachse voneinander beabstandet sind. Die Stößel weisen entsprechend der Lage der Anschlüsse unterschiedliche Längen in axialer Richtung ausgehend vom Steuerkolben auf.

Es ist möglich, dass bei allen Ausgestaltungen der Verschlusskörper die Welle des Getriebes eine Zentralwelle ist, welche konzentrische zur Mittelachse des Automatikgetriebes angeordnet ist. Die Mittelachse des Automatikgetriebes ist auch die Drehachse der Antriebswelle.

In einer weiteren Ausgestaltung der Erfindung ist es möglich, dass das Absperrventil als schaltbares Sitzventil ausgebildet ist. Im Gegensatz zu einem einfachen Schieberventil weist ein Sitzventil eine hohe Dichtigkeit auf, so dass der im Betätigungsdruckraum eingesperrte Druck nicht wesentlich über der Zeit absinken kann.

Es ist möglich, dass das Sitzventil als Kegel- oder als Tellersitzventil ausgebildet ist.

In diesem Zusammenhang ist in einer vorteilhaften Ausgestaltung vorgesehen, dass der Verschlusskörper eine Außenkontur oder Innenkontur mit mehreren zylindrischen Abschnitten aufweist, wobei diese unterschiedliche Innendurchmesser bzw. Außendurchmesser aufweisen, so dass die Außenkontur oder Innenkontur stufenförmig ausgebildet ist. Der Gehäusekörper, innerhalb dessen oder an welchem der Verschlusskörper axial verschiebbar geführt ist, weist eine entsprechende stufenförmige Gegenkontur mit unterschiedlichen Durchmessern auf, wobei Verschlusskörper und Gehäusekörper an den Übergängen benachbarter Kolbenabschnitte unterschiedlichen Durchmessers in der ersten Stellung des Verschlusskörpers aneinander anliegen, wodurch an jedem Übergang ein Dichtsitz gebildet wird.

In einer möglichen Ausgestaltung hiervon ist gezeigt, dass bei einer Ausführung des Verschlusskörpers als Kolbenschieber der Kolbenschieber als Stufenkolben ausgebildet ist, welcher mehrere Kolbenabschnitte aufweist, deren jeweilige Außendurchmesser unterschiedlich sind und von einem zum anderen Ende des Kolbenschiebers stufenartig zunehmen. Der Kolbenschieber weist mindestens so viele Kolbenabschnitte unterschiedlichen Durchmessers wie an das Absperrventil angeschlossene Aktuatoren auf. Dieser ist in einer im Gehäusekörper ausgebildeten axial gerichteten Stufenbohrung geführt, welche als Gegenkontur zum Stufenkolben mehrere Bohrungsabschnitte unterschiedlichen Innendurchmessers aufweist. Hierdurch ist der Kolbenschieber in der Stufenbohrung so weit verschiebbar, bis die Absätze zwischen zwei Kolbenabschnitten an den entsprechenden Absätzen der Bohrungsabschnitte aneinander anliegen und damit einen Dichtsitz bilden, was der ersten Stellung des Verschlusskörpers entspricht und womit die Aktuatoren verschlossen sind.

In einer vorteilhaften Ausgestaltung dieser Variante ist vorgesehen, dass der Gehäusekörper eine Welle des Getriebes ist, wobei der Kolbenschieber in axialer Richtung der Welle verschiebbar innerhalb der Welle angeordnet ist. Durch diese Anordnung benötigt das Absperrventil keinerlei Bauraum in radialer Richtung außerhalb der Welle, so dass die Größe des Automatikgetriebes nicht beeinflusst wird.

Bei einer Ausgestaltung des Verschlusskörpers als Hülsenschieber ist es möglich, dass eine Innenkontur des Hülsenschiebers als Stufenbohrung ausgebildet ist und mehrere Bohrungsabschnitte unterschiedlichen Innendurchmessers aufweist. Hierbei ist der Hülsenschieber an einer Außenkontur der ebenfalls mehrere Wellenabschnitte unterschiedlichen Durchmessers als Gegenkontur aufweisenden Welle axial geführt. Sowohl der Hülsenschieber als auch die Welle weisen mindestens so viele Bohrungs- bzw. Wellenabschnitte unterschiedlichen Durchmessers wie angeschlossene Aktuatoren auf. Der Hülsenschieber ist auf der stufenförmigen Welle so weit in axialer Richtung verschiebbar, bis die Absätze zwischen den Bohrungsabschnitten unterschiedlichen Durchmessers an den entsprechenden Absätzen der Wellenabschnitte aneinander anliegen und damit eine Anschlagposition entsprechend der ersten Stellung sowie einen Dichtsitz bilden, womit die Aktuatoren verschlossen sind. Die Außenkontur des Hülsenschiebers bzw. die Innenkontur des ebenfalls als Gehäusekörper wirksamen Gehäuseteils kann dann zylindrisch mit einem einheitlichen Durchmesser ausgebildet sein.

Alternativ hierzu wäre es möglich, dass die Innenkontur des Hülsenschiebers bzw. die Außenkontur der als Gehäusekörper wirksamen Welle zylindrisch mit einem einheitlichen Durchmesser ausgebildet ist. Bei dieser Ausgestaltung würde dann die Außenkontur des Hülsenschiebers, bzw. die Innenkontur des Gehäuseteils als Gegenkontur hierzu mehrere Abschnitte unterschiedlichen Durchmessers aufweisen.

Vorteilhafterweise ist die Anzahl der Dichtsitze - und damit auch die Anzahl der zylindrischen Abschnitte - um einen Dichtsitz größer wie die Anzahl der Aktuatoren bzw. der Anschlüsse zu deren Betätigungsdruckräumen, so dass jeder Anschluss zum Betätigungsdruckraum des Aktuators zwischen zwei Dichtsitzen abgedichtet ist.

Alternativ zu den genannten Anordnungen des Absperrventils in einer Welle des Getriebes bzw. in der Zentralwelle kann das Absperrventil auch direkt am Schaltelement bzw. in dem Betätigungsdruckraum des Schaltelements angeordnet sein.

In einer besonders vorteilhaften Ausgestaltung des Kolbenschiebers bzw. auch des Hülsenschiebers ist es möglich, dass der Verschlusskörper mehrstückig ausgebildet ist, wobei dieser mehrere zylindrische Schieberabschnitte unterschiedlichen Durchmessers umfasst, die konzentrisch ineinander geführt und axial gegeneinander verschiebbar sind und zwischen welchen als Druckfedern wirksame elastische Ausgleichselemente angeordnet sind, so dass in der ersten Stellung des Verschlusskörpers jeder Schieberabschnitt unabhängig von den anderen Schieberabschnitten über die Ausgleichselemente an den jeweiligen Dichtsitz gedrückt wird. Hierdurch ist es möglich, fertigungsbedingte Toleranzen zwischen Verschlusskörper und Gehäusekörper auszugleichen, da diese eine Mehrfachpassung bilden. Die Anzahl der Passungen entspricht der Anzahl der zylindrischen Abschnitte. Hierdurch kann es dazu kommen, dass Verschlusskörper und Gehäusekörper nur an einem Absatz der zylindrischen Abschnitte bzw. Dichtsitz aneinander anliegen und alle anderen Dichtsitze undicht sind, da diese einen Spalt aufweisen.

In diesem Zusammenhang ist es möglich, dass im Bereich der Dichtsitze an dem Verschlusskörper und/oder dem Gehäusekörper ein elastisches Dichtelement so angeordnet ist, dass mittels diesem die Abdichtung erfolgt. Durch die elastischen Dichtelemente können ebenfalls fertigungsbedingte die Toleranzen, sowohl was die axiale Mehrfachpassung als auch was Rundheit der Zylinderform der Abschnitte, Planheit der Absätze zwischen den zylindrischen Abschnitten oder Oberflächenrauigkeiten ausgeglichen werden und damit die Dichtigkeit der Dichtsitze erhöht werden.

Ein Automatikgetriebe für ein Kraftfahrzeug weist die beschriebene hydraulische Steuerungsvorrichtung auf, wodurch die Funktionssicherheit in dargestellter Weise erhöht wird. Vorteilhafterweise wird bei der Verwendung einer erfindungsgemäßen hydraulischen Steuerungsvorrichtung auch der Getriebewirkungsgrad erhöht, da durch die Aufrechterhaltung des Betätigungsdrucks unabhängig von dem Druck der motorgetriebenen Druckquelle bzw. Pumpe außerhalb der Schaltungen der von der Druckquelle zu erzeugende Druck reduziert werden kann. Hierdurch wird ein geringerer Betrag der vom Motor erzeugten mechanischen Leistung in hydraulische Leistung umgewandelt.

Es ist möglich, dass das Automatikgetriebe mehrere Schaltelemente aufweist, von welchen mindestens zwei zur Darstellung einer Übersetzungsstufe druckbeaufschlagt geschlossen sind.

Außerdem kann darüber hinaus vorgesehen sein, dass ein weiteres Schaltelement unter einer Druckbeaufschlagung dessen Aktuators geöffnet ist.

Alternativ hierzu oder zusätzlich ist es möglich, dass das Automatikgetriebe mindestens zwei Schaltelemente aufweist, welche unter der Druckbeaufschlagung derer Aktuatoren geöffnet sind.

Ausführungsbeispiele des erfindungsgemäßen Verfahrens sind in den Zeichnungen dargestellt und werden im Folgenden näher beschrieben.

Es zeigen
- Fig. 1: ein Hydraulikschema einer hydraulischen Steuerungsvorrichtung mit einem Absperrventil nach dem Stand der Technik;
- Fig. 2: ein Hydraulikschema einer erfindungsgemäßen hydraulischen Steuerungsvorrichtung;
- Fig. 3a: eine erste Ausgestaltung eines erfindungsgemäßen Absperrventils in einer ersten Schaltstellung;
- Fig. 3b: eine erste Ausgestaltung eines erfindungsgemäßen Absperrventils in einer zweiten Schaltstellung;
- Fig. 4a: eine zweite Ausgestaltung eines erfindungsgemäßen Absperrventils in einer ersten Schaltstellung;
- Fig. 4b: eine zweite Ausgestaltung eines erfindungsgemäßen Absperrventils in einer zweiten Schaltstellung;
- Fig. 5a: eine dritte Ausgestaltung eines erfindungsgemäßen Absperrventils in einer ersten Schaltstellung und
- Fig. 5b: eine dritte Ausgestaltung eines erfindungsgemäßen Absperrventils in einer zweiten Schaltstellung.

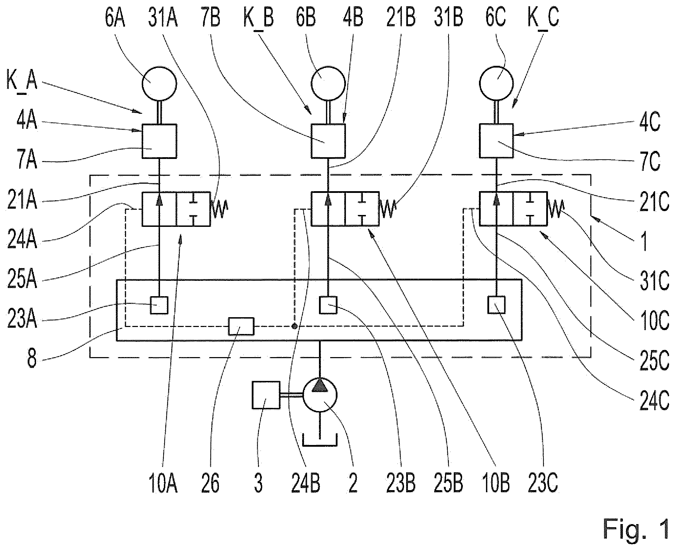

Fig. 1 zeigt die schematische Darstellung einer hydraulischen Steuerungsvorrichtung 1 nach dem Stand der Technik, welche im gezeigten Beispiel mit drei Schaltelementen A, B und C hydraulisch verbunden ist. Grundsätzlich sind mindestens zwei Schaltelemente in einem Automatikgetriebe vorhanden.

Jedes Schaltelement umfasst eine Mechanik 6A, 6B, 6C und einen Aktuator 4A, 4B, 4C, welcher einen Betätigungsdruckraum 7A, 7B, 7C aufweist. Die Mechanik 6A, 6B, 6C ist in einem Automatikgetriebe vorzugsweise als Lamellenkupplung bzw. reibschlüssig ausgebildet. Ein Schaltelement kann grundsätzlich auch formschlüssig und als Kupplung (verbindet zwei drehende Teile) oder Bremse (verbindet ein drehendes mit einem stehenden Teil) ausgebildet sein. Durch eine Druckbeaufschlagung des Betätigungsdruckraums 7A, 7B, 7C wird mittels des Aktuators 4A, 4B, 4C eine mechanische Kraft auf die Mechanik 6A, 6B, 6C ausgeübt, wodurch das jeweilige Schaltelement betätigt, d. h. geschlossen oder geöffnet wird. In einem Automatikgetriebe ist üblicherweise das Schaltelement unter einer Druckbeaufschlagung geschlossen, was einen Vorteil hinsichtlich der Funktionssicherheit bedeutet, da beim Ausfall bzw. Stillstand einer als Druckquelle dienenden Pumpe alle Schaltelemente öffnen, wodurch unbestimmte Getriebezustände vermieden werden.

Der Aktuator ist in bekannten Automatikgetrieben als Hydraulikzylinder ausgebildet, innerhalb dessen ein Kolben angeordnet ist, so dass ein Betätigungsdruckraum zwischen Kolben und Zylinderwandung gebildet wird. Bei einer Druckbeaufschlagung des Betätigungsdruckraums wirkt der Druck auch auf den Kolben, welcher wiederum eine mechanische Kraft auf die Lamellen des Schaltelements ausübt.

Die hydraulische Steuerungsvorrichtung 1 umfasst in dem gezeigten Beispiel ein hydraulisches Schaltgerät 11 und drei jeweils zwischen dem hydraulischen Schaltgerät 11 und den Aktuatoren 4A, 4B, 4C angeordnete Absperrventile 10A, 10B und 10C. Jedem Schaltelement A, B und C ist ein Absperrventil 10A, 10B und 10C zugeordnet und über jeweils einen Anschluss 21A, 21B und 21C mit diesem verbunden. Das hydraulische Schaltgerät 11 umfasst vier Druckstelleinrichtungen, von welchen die drei Druckstelleinrichtungen 23A, 23B, 23C den Schaltelementen A, B und C zugeordnet sind und ist zu dessen Versorgung mit einem Druckmedium mit einer von einem Antriebsmotor 3 angetriebenen Pumpe 1 hydraulisch verbunden. Die vierte Druckstelleinrichtung ist eine Steuerdruckstelleinrichtung 26, welche den Absperrventilen 10A, 10B und 10C zugeordnet ist und die einen Steuerdruck p_S einstellt. Alle Absperrventile 10A, 10B und 10C sind bei dieser Ausführung gleich gestaltet und als 2/2-Wegeventile ausgebildet, d. h. sie sind in zwei Schaltstellungen schaltbar und weisen jeweils zwei Druckanschlüsse 21A und 25A, 21B und 25B, 21C und 25C auf. Durch den Druckanschluss 25A ist das Absperrventil 10A mit der Druckstelleinrichtung 23A verbunden. Entsprechend sind die Druckanschlüsse 25 B und 25C jeweils mit den Druckstelleinrichtungen 23B und 23 C verbunden.

Alle Druckstelleinrichtungen 23A, 23B, 23C, 26 können in den mit ihnen verbundenen Bereichen eins Hydrauliksystems einen Druck von einem Umgebungsdruck p_0 bis zu einem von der Pumpe 1 erzeugten Systemdruck p_SYS einstellen. Mittels einer Verbindung eines Bereichs des Hydrauliksystems durch eine Druckstelleinrichtung mit einem Bereich des Automatikgetriebes, in welchem der Umgebungsdruck p_0 herrscht, wird der betreffende Bereich drucklos, was auch als entlüftet bezeichnet wird.

Jedes Absperrventil 10A, 10B, 10C weist einen Steuerdruckanschluss 24A, 24B, 24C auf, welche mit einer Steuerdruckstelleinrichtung 26 verbunden sind, so dass alle Absperrventile 10A, 10B, 10C gleichzeitig mit dem Steuerdruck p_S beaufschlagbar sind.

Durch die Druckbeaufschlagung der Absperrventile 10A, 10B, 10C mit dem Steuerdruck p_S werden diese von einer ersten Schaltstellung, in welcher der Betätigungsdruckraum 7A, 7B, 7C des jeweiligen Aktuators 4A, 4B, 4C abgeschlossen ist, entgegen der Kraft einer Feder 31A, 31B, 31C in eine zweite Schaltstellung schaltet, welche in der Darstellung gezeigt ist. In der zweiten Schaltstellung sind die Betätigungsdruckräume 7A, 7B, 7C der Schaltelemente A, B, C durch die Anschlüsse 21A, 21B und 21C mit den Druckstelleinrichtungen 23A, 23B, 23C des hydraulischen Schaltgeräts 11 verbunden. Diese zweite Schaltstellung nimmt das Absperrventil beispielsweise bei einem Schaltvorgang zum Herbeiführen eines Gangwechsels ein. Für ein Schaltelement, das zum Gangwechsel druckbeaufschlagt werden bzw. geschlossen werden soll, wird in der mit dem Schaltelement durch das Absperrventil verbundenen Druckstelleinrichtung ein so genannter Kupplungsventildruck p_V eingestellt, welcher dann einem den entsprechenden Betätigungsdruckraum beaufschlagenden Kupplungsdruck p_K entspricht. Der Aktuator eines Schaltelements, das geöffnet werden soll, wird von der entsprechenden Druckstelleinrichtung drucklos geschaltet. Diese Ausgestaltung eines Absperrventils, welches in drucklosem Zustand der hydraulischen Steuerungsvorrichtung bzw. bei einem Stillstand der Pumpe geschlossen ist, wird auch als "normally closed" bezeichnet.

Grundsätzlich ist es auch möglich, das Absperrventil so auszubilden, dass durch eine Druckbeaufschlagung des Steuerdruckanschlusses mit dem Steuerdruck das Absperrventil bzw. der Betätigungsdruckraum geschlossen und unter Wirkung der Feder bei entsprechend abgesenktem Steuerdruck geöffnet ist ("normally opened").

Ist die Schaltung beendet, werden die Steuerdruckanschlüsse 24A, 24B, 24C der Absperrventile 10A, 10B, 10C durch die Steuerdruckstelleinrichtung 26 entlüftet, wodurch die Feder 31A, 31B, 31C das Absperrventil in die erste Schaltstellung schaltet, so dass der Kupplungsdruck p_K in dem Betätigungsdruckraum eingeschlossen ist und unabhängig von dem Systemdruck_p_SYS auf seinem Niveau bleibt, so dass das Schaltelement geschlossen und die jeweilige Übersetzungsstufe damit eingelegt bleibt. Der von der Pumpe 1 erzeugte Systemdruck p_SYS kann nun reduziert werden, so dass die Leistungsaufnahme der Pumpe sinkt und der Wirkungsgrad des Automatikgetriebes steigt.

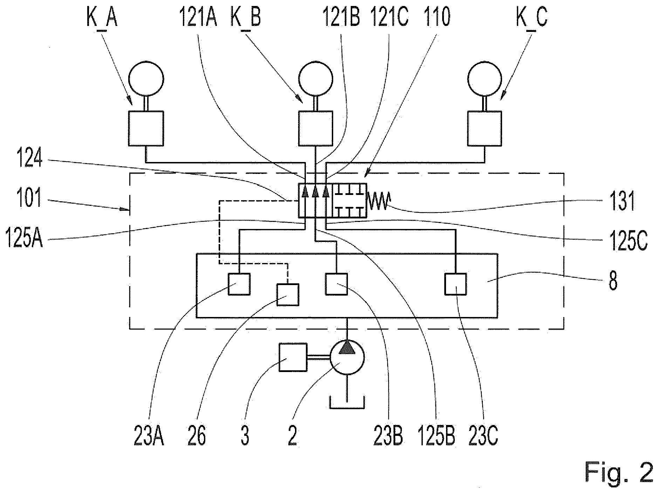

Fig. 2 zeigt ein Hydraulikschema einer erfindungsgemäßen hydraulischen Steuerungsvorrichtung 101. Hierbei sind alle Schaltelemente A, B, C durch ein gemeinsames Absperrventil 110 mit dem hydraulischen Schaltgerät 111 verbindbar. Das Absperrventil 110 ist in der gezeigten Ausgestaltung als 2/6-Wegeventil ausgebildet, d. h. es ist in zwei Schaltstellungen schaltbar und weist sechs Druckanschlüsse 121A, 121B, 121C, 125A, 125B, 125C auf. Allgemein, d. h. bei einer beliebigen Anzahl von Schaltelementen entspricht die Anzahl der Druckanschlüsse an einem erfindungsgemäßen Absperrventil dem doppelten Wert der Anzahl der Schaltelemente. Zusätzlich zu den Druckanschlüssen weist das Absperrventil 110 einen Steuerdruckanschluss 124 auf, welcher mit einer Steuerdruckstelleinrichtung 126 verbunden und von dieser mit einem Steuerdruck p_S beaufschlagbar ist.

In dem gezeigten Ausführungsbeispiel ist das Absperrventil 110 "normally closed" ausgebildet, d. h. wenn der Steuerdruckanschluss 124 durch die Steuerdruckstelleinrichtung 126 entlüftet wird, bzw. der Steuerdruck p_S einen bestimmten Druckwert unterschreitet, wird das Absperrventil 110 von der Kraft einer Feder 131 in eine zweite Schaltstellung geschaltet, in welcher das Absperrventil 110 geschlossen ist. Hierdurch ist die hydraulische Verbindung zwischen den Schaltelementen A, B, C bzw. derer Betätigungsdruckräume mit den Druckstelleinrichtungen 23A, 23B, 23C unterbrochen und die Betätigungsdruckräume 7A, 7B, 7C verschlossen. Grundsätzlich kann das Absperrventil auch "normally opened" ausgebildet sein. Um den in einem oder mehreren Betätigungsdruckräumen eingeschlossenen Kupplungsdruck p_K konstant zu halten, muss das Absperrventil 110 so ausgebildet sein, dass dieses dicht abschließt, d. h. keine Leckage eines Betriebsmediums zulässt. Zudem dürfen keine Leckagestellen zwischen dem Absperrventil 110 und dem jeweiligen Betätigungsdruckraum vorhanden sein.

Vorteilhafterweise werden bei einer erfindungsgemäßen hydraulischen Steuerungsvorrichtung 101 alle Schaltelemente A, B, C bzw. deren Betätigungsdruckräume 7A, 7B, 7C mittels des Absperrventils 110 zwangsläufig gleichzeitig geschlossen oder geöffnet. Ein Verklemmen eines einzelnen Absperrventils ist nicht möglich. Darüber hinaus ist bei der erfindungsgemäßen hydraulischen Steuerungsvorrichtung die Anzahl von Bauteilen und damit Kosten gegenüber dem Stand der Technik deutlich reduziert.

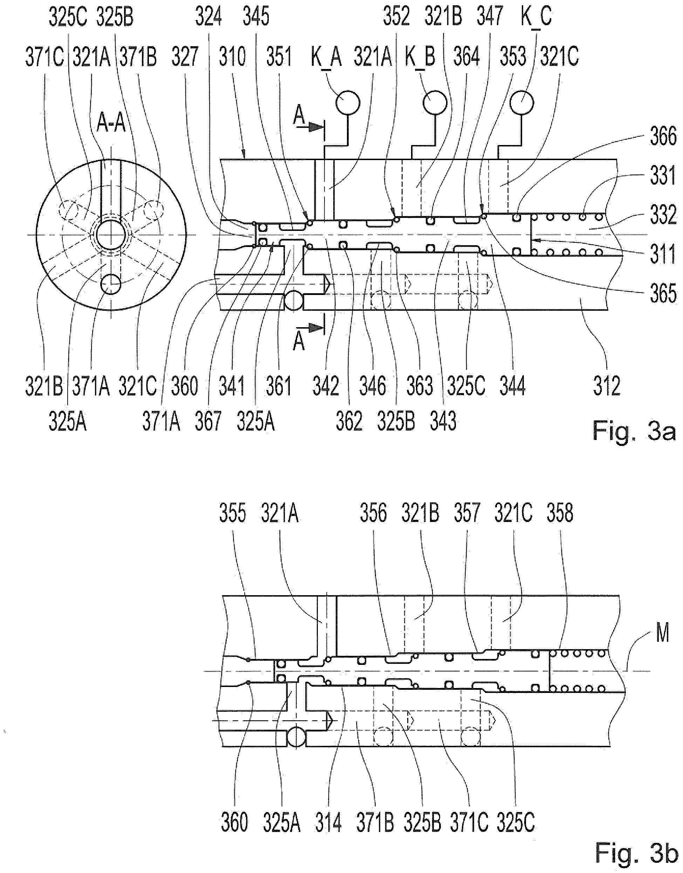

Fig. 3a zeigt einen Längsschnitt einer ersten Ausgestaltung eines erfindungsgemäßen Absperrventils 310 in der ersten Schaltstellung, sowie einen Querschnitt A-A zur Veranschaulichung der Lage bestimmter Merkmale, welche im Längsschnitt in die Zeichenebene gedreht wurden. In diesem Ausführungsbeispiel sowie in den nachfolgenden Figuren ist das Absperrventil 310 drei Schaltelementen K_A, K_B und K_C zugeordnet. Das Absperrventil 310 weist hierbei einen als Kolbenschieber 311 ausgebildeten Verschlusskörper auf, welcher in einem als Zentralwelle 312 eines Automatikgetriebes ausgebildeten Gehäusekörpers in einer Stufenbohrung 314 zwischen zwei Stellungen verschiebbar geführt ist.

Der Kolbenschieber 311 weist vier zylindrische Kolbenabschnitte 341, 342, 343 und 344 auf, wobei der Durchmesser der Kolbenabschnitte ausgehend von dem Kolbenabschnitt 341 stufenartig zunimmt. Zwischen den benachbarten Kolbenabschnitten 341 und 342 ist eine Eindrehung 345, zwischen den Kolbenabschnitten 342 und 343 eine Eindrehung 346 und zwischen den Kolbenabschnitten 343 und 344 eine Eindrehung 347 ausgebildet, wobei mit dem Begriff Eindrehung eine Lücke bzw. eine Materialaussparung zwischen den Kolbenabschnitten bezeichnet wird und keine Außenkontur des Kolbenschiebers.

Als Gegenkontur zum stufenförmigen Kolbenschieber 311 ist die Stufenbohrung 314 ebenfalls mit vier Bohrungsabschnitten 355, 356, 357 und 358, welche aus Gründen der Übersichtlichkeit in Fig. 3b bezeichnet sind, ausgebildet. In den Übergängen zwischen den vier einzelnen Bohrungsabschnitten ausgebildete drei Absätze bilden jeweils einen Dichtsitz 351, 352 und 353. Der Dichtsitz, d. h. der Übergang kann hierbei kegelförmig oder stufig, d. h. ohne axiale Erstreckung des Übergangs ausgebildet sein. Alternativ oder gleichzeitig hierzu wäre es auch möglich, die Übergänge zwischen Kolbenabschnitten kegelförmig auszuführen.

In der Zentralwelle 312 sind in Form radial von der Stufenbohrung 314 ausgehender Bohrungen Kupplungsanschlüsse 321A, 321B und 321C ausgebildet, welche das Absperrventil 310 gemäß dem Index nach der Zahl des Bezugszeichens mit den jeweils zugeordneten Schaltelementen K_A, K_B und K_C verbinden und innerhalb der Länge der Bohrungsabschnitte 356, 357 und 358 in die Stufenbohrung 314 münden. Die Kupplungsanschlüsse 321A, 321B und 321C sind wie aus dem Schnitt A-A hervorgeht gegeneinander verdreht und aus Gründen der Darstellung im Längsschnitt in die Zeichenebene gedreht. Theoretisch wäre es aber auch möglich, die Kupplungsanschlüsse 321A, 321B und 321C in einer Ebene anzuordnen, da Durchdringungen ausgeschlossen sind.

Innerhalb der Länge der Bohrungsabschnitte 355, 356 und 357, mündet axial zu den Kupplungsanschlüssen 321A, 321B und 321C versetzt, jeweils ein Druckanschluss 325A, 325B und 325C. Das Absperrventil 310 weist einen Steuerdruckanschluss 324 auf, welcher mit dem Bohrungsabschnitt mit dem kleinsten Durchmesser, in diesem Falle dem Bohrungsabschnitt 355 verbunden ist. In dem Bohrungsabschnitt 355 ist ein Steuerdruckraum 327 ausgebildet, welcher durch den Steuerdruckanschluss 324 mit einer Steuerdruckstelleinrichtung verbunden ist. Hierdurch ist der Kolbenschieber 311 von einem Steuerdruck p_S beaufschlagbar. In dem Bohrungsabschnitt 358, welcher den größten Durchmesser aufweist, ist ein Federraum 332 ausgebildet, in welchem eine Feder 331 geführt ist. Der Federraum 332 ist drucklos.

In Fig. 3a befindet sich der Kolbenschieber 311 in einer ersten Schaltstellung, welche unter der Wirkung der zwischen der Zentralwelle 312 und dem Kolbenschieber 311 vorgespannten Feder 331 dann eingenommen wird, wenn der Steuerdruckraum 327 drucklos ist, oder der Steuerdruck p_S eine geringere Kraft auf den Kolbenschieber 311 ausübt wie Feder 331. Die Kolbenabschnitte 342, 343 und 344 des Kolbenschiebers 311 liegen in der ersten Schaltstellung an den Dichtsitzen 351, 352 und 353 an. Je nach der geometrischen Gestaltung der Dichtsitze kann das Absperrventil 310 als Kegelsitzventil oder bei stufigem Übergang als Tellersitzventil ausgebildet sein. Die Dichtsitze sind für eine sichere Abdichtung des jeweiligen Betätigungsdruckraums erforderlich, da ein Kolbenschieber bauartbedingt einen Dichtspalt mit der Bohrung bildet in welcher er geführt ist. Die Kupplungsanschlüsse 21A, 21B und 21C werden in der ersten Schaltstellung von dem Kolbenschieber 311 jeweils zwischen dem Dichtsitz 351 und einem elastischen Dichtelement 362 bzw. dem Dichtsitz 352 und einem elastischen Dichtelement 364 bzw. dem Dichtsitz 353 und einem elastischen Dichtelement 366 zu den Druckanschlüssen 325A, 325B, 325C hin abgedichtet. Zum Steuerdruckraum 327 hin ist zusätzlich ein weiteres Dichtelement 360 angeordnet, an welchem der Kolbenschieber 311 in der ersten Schaltstellung anliegt.

Zusätzlich weist der Kolbenschieber 311 im Bereich der Dichtsitze am Kolbenabschnitt 342 ein elastisches Dichtelement 361, am Kolbenabschnitt 343 ein elastisches Dichtelement 363 und am Kolbenabschnitt 344 ein elastisches Dichtelement 365 auf. Diese Dichtelemente gleichen zum einen fertigungsbedingte Toleranzen betreffend Oberflächenrauigkeiten oder mangelnder Rundheit des Dichtsitzes aus. Zum anderen weisen die Stufenbohrung 314 und der Kolbenschieber 311, bzw. deren Abschnitte Toleranzen betreffend derer axialen Lage auf, so dass nur ein Kolbenabschnitt sicher an einem Dichtsitz anliegt, wohingegen bei den anderen Dichtsitzen ein Spalt besteht. Diese Spalte werden durch die elastischen Dichtelemente 361, 363 und 365 geschlossen. Der Steuerdruckraum 327 wird zum Druckanschluss 325A hin mittels eines elastischen Dichtelements 367 abgedichtet.

Fig. 3b zeigt den Kolbenschieber 311 in der zweiten Schaltstellung, in welcher die Betätigungsdruckräume der Schaltelemente mit den jeweiligen Druckstelleinrichtungen verbunden sind. Der Steuerdruckraum 327 ist aus einer nicht gezeigten Steuerdruckstelleinrichtung mit dem Steuerdruck p_S beaufschlagt, der den Kolbenschieber 311 entgegen der Kraft der Feder 331 in die zweite Schaltstellung bewegt hat.

Der durch einen in der Zentralwelle 312 ausgebildeten, axial gerichteten Versorgungskanal 371A mit der zugehörigen, nicht dargestellten Druckstelleinrichtung verbundene Druckanschluss 325A steht durch die Eindrehung 345 mit dem Kupplungsanschluss 321A in Verbindung, so dass die Druckstelleinrichtung den Betätigungsdruckraum des Schaltelement befüllen bzw. mit einem Kupplungsdruck beaufschlagen kann. Entsprechend sind außerdem die Druckanschlüsse 325B und 325C durch die Eindrehungen 346 bzw. 347 mit den Kupplungsanschlüssen 321B bzw. 321C verbunden. Der Druckanschluss 325B ist durch einen Versorgungskanal 371B und der Druckanschluss 325C durch einen Versorgungskanal 371C mir der jeweiligen Druckstelleinrichtung verbunden. In den Längsschnitten der Figuren 3a und 3b sind die Zuführkanäle 371A, 371B und 371C in eine Zeichenebene gedreht. Da sich die Zuführkanäle aber durchdringen würden, sind diese tatsächlich gleichmäßig um den Umfang zueinander versetzt, wie in dem Schnitt A-A gezeigt wird. Ebenso geht aus der Schnittdarstellung A-A hervor, dass die mit den Zuführkanälen 371A, 371B und 371C verbundenen Druckanschlüsse 325A, 325B und 325C zueinander um den Umfang versetzt angeordnet sind.

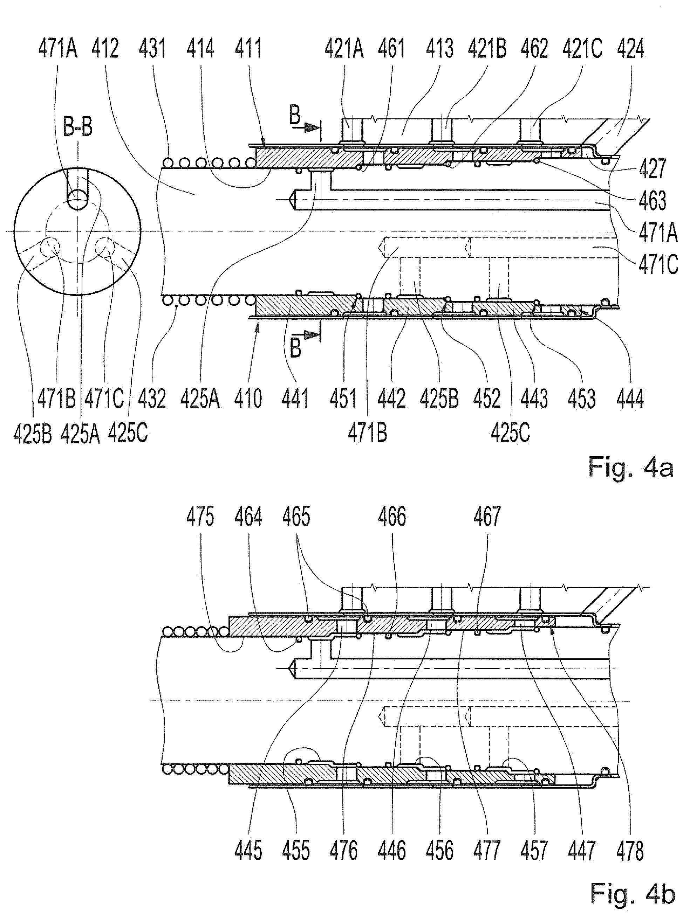

Fig. 4a zeigt eine alternative Ausgestaltung eines erfindungsgemäßen Absperrventils 410 im Längsschnitt bezogen auf eine Mittelachse M einer Zentralwelle 412, welche einen Teil eines Gehäusekörpers bildet. Ein Verschlusskörper ist hierbei als ein rohrförmiger, hohlzylindrischer Hülsenschieber 411 ausgebildet, welcher konzentrisch zu der Mittelachse M zwischen der Zentralwelle 412 und einem Getriebegehäuseteil 413 als weiteren Teil des Gehäusekörpers angeordnet und in axialer Richtung zwischen zwei Schaltstellungen verschiebbar ist.

An einer Innenkontur des Hülsenschiebers 411 ist eine Stufenbohrung 414 ausgebildet, so dass der Hülsenschieber 411 vier Hülsenabschnitte 441, 442, 443 und 44 mit einer zylindrischen Innenkontur aufweist. Die Innendurchmesser der Hülsenabschnitte nehmen ausgehend von dem Hülsenabschnitt 441 bis zum Hülsenabschnitt 444 stufenartig zu. Die Zentralwelle 412 weist als Gegenkontur zur Stufenbohrung 414 des Hülsenschiebers 411 an seiner Außenkontur vier zylindrische Wellenabschnitte 475, 476, 477 und 478 unterschiedlichen Durchmessers auf. In den Wellenabschnitten 475, 476 und 477 ist jeweils eine Eindrehung 455, 456 und 457 ausgebildet, wobei unter dem Begriff Eindrehung eine Lücke bzw. eine Materialaussparung in der Außenkontur der Zentralwelle 412 zu verstehen ist und nicht die Form der Außenkontur.

In dem Getriebegehäuseteil 413 sind drei Kupplungsanschlüsse 421A, 421B und 421C ausgebildet. In der Zentralwelle 412 sind drei Druckanschlüsse 425A, 425B und 425C ausgebildet, welche jeweils durch einen axial gerichteten Versorgungskanale 471A bzw. 471B bzw. 471C mit einer jeweiligen nicht gezeigten Druckstelleinrichtung verbunden sind. Die Versorgungskanäle 471A, 471B und 471C sowie die Druckanschlüsse 425A, 425B und 425C liegen aus Gründen der Darstellung im Längsschnitt alle in der Zeichenebene, was jedoch technisch nicht möglich ist, da sich die Versorgungskanäle durchdringen würden. Die Schnittdarstellung B-B zeigt die tatsächliche Anordnung der Versorgungskanäle 471A, 471B und 471C sowie der mit diesen jeweils verbundenen Druckanschlüsse 425A, 425B und 425C innerhalb der Zentralwelle 412.

Der Hülsenschieber 411 weist mindestens drei Durchlässe 445, 446 und 447 auf, durch welche in einer zweiten Schaltstellung des Hülsenschiebers 411 die Kupplungsanschlüsse 421A, 421B, 421C mit den Druckanschlüssen 425A, 425B, 425C verbindbar sind. Es können an jeder der axialen Positionen der Durchlässe 445, 446 und 447 mehrere Durchlässe am Umfang verteilt sein.

Das Absperrventil 410 weist in dem Getriebegehäuseteil 413 an einem Ende des Hülsenschiebers 411 einen Steuerdruckraum 427 auf, welcher durch einen Steuerdruckanschluss 424 mit einer nicht dargestellten Steuerdruckstelleinrichtung zur Einstellung eines Steuerdrucks p_S verbunden ist. An dem anderen Ende des Hülsenschiebers 411 ist zwischen dem Gehäusekörper und dem Hülsenschieber 411 eine Feder 431 vorgespannt angeordnet.

In der ersten Schaltstellung des Hülsenschiebers 411 liegt dieser mit den inneren Enden seiner Hülsenabschnitte 441, 442 und 443 an den Übergängen zwischen den Wellenabschnitten 475, 476, 477 und 478 an, wobei die Übergänge die Dichtsitze 451, 452 und 453 bilden. Im Bereich der Dichtsitze 451, 452 und 453 ist an der Zentralwelle 412 aus Gründen eines Toleranzausgleichs wie unter Fig. 3a und 3b jeweils ein elastisches Dichtelement 461, 462 und 463 angeordnet. Zur Abdichtung zwischen zwei benachbarten Kupplungsanschlüssen sind an der Zentralwelle 412 radial dichtende elastische Dichtelemente 464, 466 und 467 angeordnet. An der zylindrischen Außenkontur des Hülsenschiebers 411 sind zwischen den Durchlässen 445, 446 und 447 sowie zwischen den Durchlässen 445 und 447 und dem jeweiligen Ende des Hülsenschiebers 411 radial zum Getriebegehäuseteil 413 dichtende elastische Dichtelemente 465 angeordnet. Grundsätzlich können die Dichtelemente wahlweise an der Zentralwelle 412 oder am Hülsenschieber 411 angeordnet sein.

Die erste Schaltstellung des Hülsenschiebers 411 wird bei einem entlüfteten Steuerdruckraum 427 unter der Wirkung der vorgespannten Feder 431 eingenommen. In dieser Schaltstellung sind die Kupplungsanschlüsse 421A, 421B und 421C mit beschriebenen Mitteln dicht abgeschlossen.

Fig. 4b zeigt das Absperrventil 410 mit dem Hülsenschieber 411, welcher unter der Wirkung eines Steuerdrucks p_S entgegen der Kraft der Feder 431 in die zweite Schaltstellung bewegt wurde. Die Kupplungsanschlüsse 421A, 421B und 421C sind durch die Durchlässe 445, 446 und 447 und die Eindrehungen 455, 456 und 457 mit den Druckanschlüssen 425A, 425B und 425C verbunden, so dass die nicht dargestellten Betätigungsdruckräume der Schaltelement befüllt, bzw. mit einem Kupplungsdruck p_K beaufschlagbar sind.

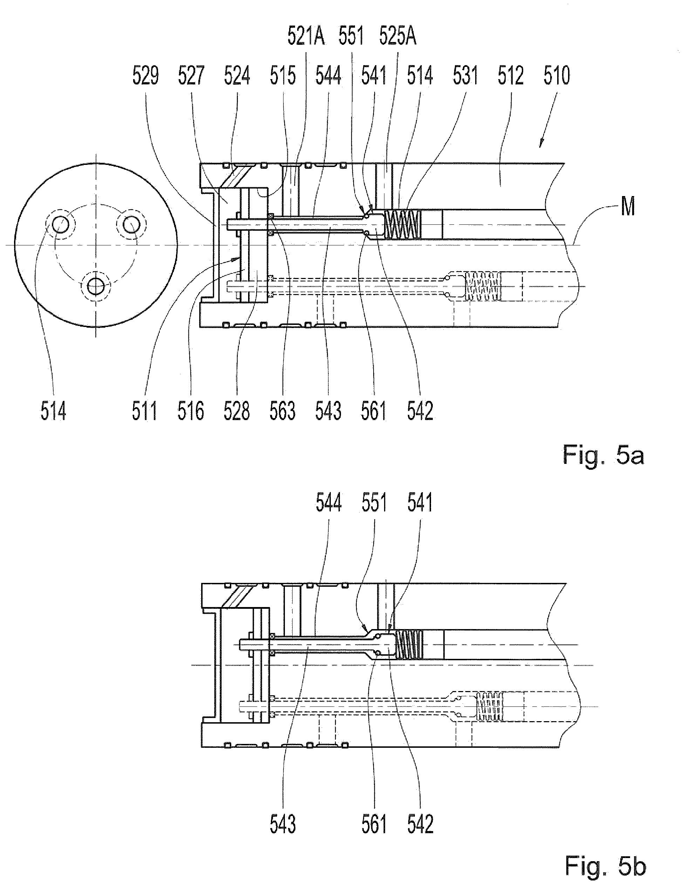

Fig. 5a zeigt einen Längsschnitt einer weiteren Ausgestaltung eines Absperrventils 510 in der ersten Schaltstellung. Ein Verschlusskörper ist hierbei mehrteilig als Stößelschieber 511 ausgebildet, welcher innerhalb einer Zentralwelle 512 axial in Bezug auf eine Mittelachse M der Zentralwelle 512 zwischen zwei Schaltstellungen verschiebbar ist.

Der Stößelschieber 511 umfasst hierbei einen Steuerkolben 516 und drei an diesem befestigten Stößel unterschiedlicher Länge. Aufgrund der Anordnung der drei Stößel innerhalb der Zentralwelle 512 ist nur ein Stößel 541 in die Zeichenebene gedreht dargestellt. Da alle Stößel bis auf die unterschiedlichen Längen gleich aufgebaut sind, wird deren Aufbau und Wirkungsweise nur an dem Stößel 541 beschrieben. Die Anzahl der Stößel entspricht hierbei der Anzahl der mit dem Absperrventil 510 verbundenen Schaltelemente. Ein weiterer Stößel mit anderer Länge ist in der Darstellung von Fig. 5a in unterbrochenen Linien dargestellt. Zudem zeigt ein schematischer Schnitt die Lage von drei Stößeln über den Umfang der Zentralwelle 512.

Der Steuerkolben 516 ist in einer zur Mittelachse M konzentrischen Zylinderbohrung 515 axial verschiebbar geführt. Die Zylinderbohrung 515 ist mit einer Dichtplatte 529 druckdicht verschlossen. Unter einem druckdichten Verschluss ist in diesem Zusammenhang zu verstehen, dass an dieser Stelle auch unter einer Druckbeaufschlagung mit dem dafür vorgesehenen Betriebsdruck keine Leckage aus dem Federraum 532 in den Fortsatz der Ventilbohrung 514 gelangen kann. Zwischen dem Steuerkolben 516 und der Dichtplatte 529 ist ein Steuerdruckraum 527 ausgebildet, der durch einen Steuerdruckanschluss 524 mit einer nicht dargestellten Steuerdruckstelleinrichtung verbunden und von dieser mit einem Steuerdruck p_S beaufschlagbar ist. Zwischen dem Steuerkolben 516 und dem Ende der sacklochartigen Zylinderbohrung 515 ist ein entlüfteter Ausgleichsdruckraum 528 ausgebildet, in welchem ein Umgebungsdruck p_0 herrscht.

Der Stößel 541 ist in einer axial gerichteten Ventilbohrung 514 angeordnet. Die Ventilbohrung 514 weist hierbei zwei Bohrungsabschnitte 555 und 556 unterschiedlichen Durchmessers auf, an deren Übergang ineinander ein kegelförmiger Dichtsitz 551 ausgebildet ist. Alternativ hierzu könnte dieser Übergang auch stufenförmig ausgebildet sein. Der Stößel 541 weist zwei Ventilabschnitte 542 und 543 unterschiedlichen Durchmessers auf, wobei der Ventilabschnitt 542 mit dem größeren Durchmesser in der ersten Schaltstellung am Dichtsitz 551 anliegt. In den Bohrungsabschnitt 556, welcher einen kleineren Durchmesser aufweist als der Bohrungsabschnitt 555, mündet ein Kupplungsanschluss 521A, der mit einem nicht gezeigten Betätigungsdruckraum eines Schaltelements K_A verbunden ist. In den Bohrungsabschnitt 555 mündet ein Druckanschluss 525A, welcher mit einer nicht gezeigten Druckstelleinrichtung für das ebenfalls nicht dargestellte Schaltelement K_A verbunden ist. Zwischen dem Ende des Stößels 541 am Ventilabschnitt 542 und einem Verschlussstopfen 558 ist im Bohrungsabschnitt 555 in einem Federraum 532 eine Feder 531 angeordnet, welche auch in der ersten Schaltstellung des Stößels 541 vorgespannt ist. Der Verschlussstopfen 558 ist fest mit der Zentralwelle 512 verbunden und dichtet den Federraum 532 ab. Der Druck im Federraum 532 wird durch den Druckanschluss 525A von der betreffenden nicht gezeigten Druckstelleinrichtung eingestellt.

Ist der Steuerdruckraum 527 drucklos, wird der Stößel 541 durch die Kraftwirkung der Feder 531 gegen den Dichtsitz 551 in die erste Schaltstellung gedrückt. Analog hierzu gilt dies für die anderen beiden Stößel, welche durch den Steuerkolben 516 mit dem Stößel 541 verbunden sind. Die Koppelung ist derart, dass die Stößel und der Steuerkolben 516 nicht in axialer Richtung gegeneinander verschoben werden können. Die Dichtwirkung zwischen dem Ventilabschnitt 542 und dem Dichtsitz 551 wird durch ein elastisches Dichtelement 561 erhöht, welches am Ventilabschnitt 542 abgeordnet ist. Alternativ hierzu könnte das Dichtelement 561 auch am Dichtsitz 551 angeordnet sein. Ein weiteres, radial wirkendes elastisches Dichtelement 563 ist am Ende des Bohrungsabschnitts 556 zum Ausgleichsdruckraum 528 hin zwischen dem Ventilabschnitt 543 und der umgebenden Zentralwelle 512 angeordnet. Die Differenz zwischen einem Innendurchmesser des Bohrungsabschnitts 556 bzw. des Bohrungsabschnitts 555 und dem Außendurchmesser des Ventilabschnitts 543 bzw. des Ventilabschnitts 542 ist so groß gewählt, dass ein hohlzylindrischer Durchlass 544 als frei durchströmbarer ringförmiger Querschnitt ausgebildet ist.

In der ersten Schaltstellung wird somit der Kupplungsanschluss 521A und damit ein nicht gezeigter Betätigungsdruckraum eines Schaltelements K_A von dem Stößel 541 sowie den Dichtelementen 561 und 563 verschlossen.

Fig. 5b zeigt den Stößelschieber 511 des Absperrventils 510 in der zweiten Schaltstellung. Hierbei ist der Steuerdruckraum 527 durch den Steuerdruckanschluss 524 mit dem Steuerdruck p_S beaufschlagt, wodurch der Steuerkolben 516 und mit diesem der Stößel 541 entgegen der Kraft der Feder 531 in die zweite Schaltstellung verschoben sind. Der Ventilabschnitt 542 liegt nicht mehr am Dichtsitz 551 an und der Kupplungsanschluss 521A ist durch den Durchlass 544 und den Federdruckraum 532 mit dem Druckanschluss 525A verbunden. Analog gilt dies auch für die anderen beiden, nicht dargestellten Stößel, bzw. die anderen beiden Schaltelemente K_B und K_C.

### Bezugszeichen

- 1: Hydraulische Steuerungsvorrichtung
- 2: Pumpe, Druckquelle
- 3: Antriebsmotor
- 8: hydraulisches Schaltgerät
- 4A: Aktuator des Schaltelements A
- 4B: Aktuator des Schaltelements B
- 4C: Aktuator des Schaltelements C
- 6A: Mechanik des Schaltelements A
- 6B: Mechanik des Schaltelements B
- 6C: Mechanik des Schaltelements C
- 7A: Betätigungsdruckraum des Schaltelements A
- 7B: Betätigungsdruckraum des Schaltelements B
- 7C: Betätigungsdruckraum des Schaltelements C
- 10A: Absperrventil
- 10B: Absperrventil
- 10C: Absperrventil
- 21A: Druckanschluss
- 21B: Druckanschluss
- 21C: Druckanschluss
- 23A: Druckstelleinrichtung
- 23B: Druckstelleinrichtung
- 23C: Druckstelleinrichtung
- 24A: Steuerdruckanschluss
- 24B: Steuerdruckanschluss
- 24C: Steuerdruckanschluss
- 25A: Druckanschluss
- 25B: Druckanschluss
- 25C: Druckanschluss
- 101: Hydraulische Steuerungsvorrichtung
- 110: Absperrventil
- 121A: Druckanschluss
- 121B: Druckanschluss
- 121C: Druckanschluss
- 124: Steuerdruckanschluss
- 125A: Druckanschluss
- 125B: Druckanschluss
- 125C: Druckanschluss
- 131: Feder
- 310: Absperrventil
- 311: Verschlusskörper, Kolbenschieber
- 312: Zentralwelle, Gehäusekörper
- 314: Stufenbohrung
- 321A: Kupplungsdruckanschluss
- 321B: Kupplungsdruckanschluss
- 321C: Kupplungsdruckanschluss
- 324: Steuerdruckanschluss
- 325A: Druckanschluss
- 325B: Druckanschluss
- 325C: Druckanschluss
- 327: Steuerdruckraum
- 331: Feder
- 332: Federraum
- 341: Kolbenabschnitt
- 342: Kolbenabschnitt
- 343: Kolbenabschnitt
- 344: Kolbenabschnitt
- 345: Eindrehung
- 346: Eindrehung
- 347: Eindrehung
- 351: Dichtsitz
- 352: Dichtsitz
- 353: Dichtsitz
- 355: Bohrungsabschnitt
- 356: Bohrungsabschnitt
- 357: Bohrungsabschnitt
- 358: Bohrungsabschnitt
- 360: Dichtelement
- 361: Dichtelement
- 362: Dichtelement
- 363: Dichtelement
- 364: Dichtelement
- 365: Dichtelement
- 366: Dichtelement
- 367: Dichtelement
- 371A: Versorgungskanal
- 371B: Versorgungskanal
- 371C: Versorgungskanal
- 410: Absperrventil
- 411: Verschlusskörper, Hülsenschieber
- 412: Zentralwelle, Gehäusekörper
- 413: Gehäuseteil, Gehäusekörper
- 414: Stufenbohrung
- 421A: Druckanschluss
- 421B: Druckanschluss
- 421C: Druckanschluss
- 424: Steuerdruckanschluss
- 425A: Druckanschluss
- 425B: Druckanschluss
- 425C: Druckanschluss
- 427: Steuerdruckraum
- 431: Feder
- 432: Federraum
- 441: Hülsenabschnitt
- 442: Hülsenabschnitt
- 443: Hülsenabschnitt
- 444: Hülsenabschnitt
- 445: Durchlass
- 446: Durchlass
- 447: Durchlass
- 451: Dichtsitz
- 452: Dichtsitz
- 453: Dichtsitz
- 455: Eindrehung
- 456: Eindrehung
- 457: Eindrehung
- 461: Dichtelement
- 462: Dichtelement
- 463: Dichtelement
- 464: Dichtelement
- 465: Dichtelement
- 466: Dichtelement
- 467: Dichtelement
- 471A: Versorgungskanal
- 471B: Versorgungskanal
- 471C: Versorgungskanal
- 475: Wellenabschnitt
- 476: Wellenabschnitt
- 477: Wellenabschnitt
- 478: Wellenabschnitt
- 510: Absperrventil
- 511: Verschlusskörper, Stößelschieber
- 512: Zentralwelle, Gehäusekörper
- 514: Ventilbohrung
- 515: Zylinderbohrung
- 516: Steuerkolben
- 521A: Kupplungsanschluss
- 521B: Kupplungsanschluss
- 524: Steuerdruckanschluss
- 525A: Druckanschluss
- 525B: Druckanschluss
- 527: Steuerdruckraum
- 531: Feder
- 532: Federraum
- 541: Stößel
- 542: Ventilabschnitt
- 543: Ventilabschnitt
- 544: Durchlass
- 551: Dichtsitz
- 555: Bohrungsabschnitt
- 556: Bohrungsabschnitt
- 561: Dichtelement
- 563: Dichtelement

- K_A: Schaltelement, Kupplung
- K_B: Schaltelement, Kupplung
- K_C: Schaltelement, Kupplung
- p_0: Umgebungsdruck
- p_K: Kupplungsdruck
- p_S: Steuerdruck
- p_SYS: Systemdruck
- p_V: Kupplungsventildruck

## Patentansprüche

1. Hydraulische Steuerungsvorrichtung (101) zur Ansteuerung von mehreren Schaltelementen (K_A, K_B, K_C) zur Drehmomentübertragung in einem Automatikgetriebe, wobei jedes Schaltelement mindestens einen hydraulischen Aktuator (4A, 4B, 4C) aufweist, welcher einen Betätigungsdruckraum (7A, 7B, 7C) umfasst, mittels dessen Druckbeaufschlagung aus der hydraulischen Steuerungsvorrichtung die Schaltelemente betätigbar sind, wobei die hydraulische Steuerungsvorrichtung (101) mindestens ein schaltbares Absperrventil (110) und mindestens ein mit einer Druckquelle (2) verbundenes hydraulisches Schaltgerät (8) mit mehreren, den unterschiedlichen Schaltelementen zugeordneten Druckstelleinrichtungen (23A, 23B, 23C) umfasst, **dadurch gekennzeichnet, dass** das Absperrventil (110) derart ausgebildet und angeordnet ist, dass die Aktuatoren von mindestens zwei Schaltelementen durch ein gemeinsames Absperrventil (110) hydraulisch mit den Druckstelleinrichtungen (23A, 23B, 23C) verbindbar sind, wobei in einer ersten Schaltstellung des Absperrventils (110) alle Betätigungsdruckräume (7A, 7B, 7C) der mindestens zwei Schaltelemente (K_A, K_B, K_C) von dem Absperrventil (110) dicht verschlossen sind, und in einer zweiten Schaltstellung des Absperrventils (110) alle Betätigungsdruckräume (7A, 7B, 7C) der mindestens zwei Schaltelemente (K_A, K_B, K_C) durch das Absperrventil (110) mit der dem jeweiligen Schaltelement (K_A, K_B, K_C) zugeordneten Druckstelleinrichtung (23A, 23B, 23C) verbunden sind.

2. Hydraulische Steuerungsvorrichtung nach Anspruch 1, **dadurch gekennzeichnet, dass** das Absperrventil (110) einen Verschlusskörper (311, 411, 511) und einen Gehäusekörper (312, 412, 413, 512) umfasst, wobei der Verschlusskörper innerhalb des Gehäusekörpers angeordnet ist und der Gehäusekörper mindestens einen Anschluss (21A, 21B, 21C) zu jedem Aktuator der mindestens zwei Schaltelemente und mindestens einen Anschluss (25A, 25B, 25C) zu der dem jeweiligen der mindestens zwei Schaltelemente zugeordneten Druckstelleinrichtung (23A, 23B, 23C) aufweist, wobei der Verschlusskörper mittels einer Wirkenergie relativ zum Gehäusekörper in eine erste und eine zweite Stellung bewegbar ist, wobei in der ersten Stellung jeder der an dem Absperrventil (110, 310, 410, 510) angeschlossenen Aktuatoren verschlossen ist und in der zweiten Stellung des Verschlusskörpers die Aktuatoren der mindestens zwei Schaltelemente durch den Verschlusskörper jeweils mit der dem jeweiligen Schaltelement zugeordneten Druckstelleinrichtung verbunden sind.

3. Hydraulische Steuerungsvorrichtung nach Anspruch 2, **dadurch gekennzeichnet, dass** der Gehäusekörper einen Steuerdruckanschluss (324, 424, 524) aufweist und dass die Wirkenergie zum Bewegen des Verschlusskörpers (311, 411, 511) in eine der beiden Stellungen ein den Verschlusskörper beaufschlagender hydraulischer Steuerdruck (p_S) ist, der von dem hydraulischen Schaltgerät einstellbarer ist, und dass die Wirkenergie zum Bewegen des Verschlusskörpers in die andere der beiden Stellungen eine Vorspannkraft einer Feder (331, 431, 531), bei einem mittels des hydraulischen Schaltgeräts entsprechend abgesenkten Steuerdruck, ist.

4. Hydraulische Steuerungsvorrichtung nach Anspruch 3, **dadurch gekennzeichnet, dass** der Verschlusskörper (311, 411, 511) unter der Wirkung des Steuerdrucks (p_S) in die zweite Stellung, und unter der Wirkung der Vorspannkraft der Feder (331, 431, 531), bei einem entsprechend abgesenkten Steuerdruck, in die erste Stellung bewegbar ist.

5. Hydraulische Steuerungsvorrichtung nach einem der Ansprüche 2 bis 4, **dadurch gekennzeichnet, dass** der Verschlusskörper ein zylindrischer Kolbenschieber (311) ist, wobei der Kolbenschieber (311) verschiebbar innerhalb des Gehäusekörpers (312) angeordnet ist.

6. Hydraulische Steuerungsvorrichtung nach einem der Ansprüche 2 bis 4, **dadurch gekennzeichnet, dass** der Verschlusskörper ein hohlzylindrischer Hülsenschieber (411) und der Gehäusekörper aus einer Welle (412) des Getriebes und einem die Welle konzentrisch umschließenden Getriebegehäuseteil (413) besteht, wobei der Hülsenschieber (411) konzentrisch zu Welle (412) und damit auch dem Getriebegehäuseteil (413) zwischen beiden relativ zu diesen axial verschiebbar angeordnet ist.

7. Hydraulische Steuerungsvorrichtung nach einem der Ansprüche 2 bis 4, **dadurch gekennzeichnet, dass** ein Verschlusskörper (511) mehrere mit einem Steuerkolben (516) verbundene und durch diesen bewegbare Stößel (541) umfasst, welche axial verschiebbar innerhalb des Gehäusekörpers (512) angeordnet sind, wobei die Anzahl der Stößel mindestens der Anzahl der angeschlossenen Aktuatoren entspricht.

8. Hydraulische Steuerungsvorrichtung nach einem der Ansprüche 5 bis 7, **dadurch gekennzeichnet, dass** das Absperrventil (310, 410, 510) als schaltbares Sitzventil ausgebildet ist.

9. Hydraulische Steuerungsvorrichtung nach Anspruch 8 und nach Anspruch 5 oder 6, **dadurch gekennzeichnet, dass** der Kolbenschieber (311) als Stufenkolben ausgebildet ist, welcher mehrere Kolbenabschnitte (341, 342, 343, 344) aufweist, deren jeweilige Außendurchmesser unterschiedlich sind und von einem zum anderen Ende des Kolbenschiebers stufenartig zunehmen, wobei der Kolbenschieber (311) mindestens so viele Kolbenabschnitte unterschiedlichen Durchmessers wie an das Absperrventil angeschlossene Aktuatoren aufweist, und wobei der Kolbenschieber (311) in einer im Gehäusekörper (312) ausgebildeten axial gerichteten Stufenbohrung (314) geführt ist, welche als Gegenkontur zum Stufenkolben mehrere Bohrungsabschnitte (355, 356, 357, 358) unterschiedlichen Innendurchmessers aufweist, wobei der Kolbenschieber (311) in der Stufenbohrung (314) so weit verschiebbar ist, bis die Absätze zwischen zwei Kolbenabschnitten an den entsprechenden Absätzen der Bohrungsabschnitte aneinander anliegen und damit jeweils einen Dichtsitz (351, 352, 353) bilden, was der ersten Stellung des Kolbenschiebers (311) entspricht und womit die Aktuatoren verschlossen sind.

10. Hydraulische Steuerungsvorrichtung nach Anspruch 5 oder 9, **dadurch gekennzeichnet, dass** der Gehäusekörper eine Welle (312) des Getriebes ist, wobei der Kolbenschieber (311) in axialer Richtung der Welle (312) verschiebbar innerhalb der Welle angeordnet ist.

11. Hydraulische Steuerungsvorrichtung nach Anspruch 6 und 8, **dadurch gekennzeichnet, dass** eine Innenkontur des Hülsenschiebers (411) als Stufenbohrung (414) ausgebildet ist und mehrere Hülsenabschnitte (441, 442, 443, 444) unterschiedlichen Innendurchmessers aufweist, wobei der Hülsenschieber (411) an einer Außenkontur der ebenfalls mehrere Wellenabschnitte (475, 476, 477, 478) unterschiedlichen Durchmessers als Gegenkontur aufweisenden Welle (412) axial geführt ist, wobei der Hülsenschieber (411) mindestens so viele Hülsenabschnitte (441, 442, 443, 444) unterschiedlichen Durchmessers wie angeschlossene Aktuatoren aufweist, und wobei der Hülsenschieber (411) auf der stufenförmigen Welle (412) so weit verschiebbar ist, bis die Absätze zwischen den Hülsenabschnitten (441, 442, 443, 444) unterschiedlichen Durchmessers an den entsprechenden Absätzen der Wellenabschnitte (475, 476, 477, 478) aneinander anliegen und damit eine Anschlagposition entsprechend der ersten Stellung sowie jeweils einen Dichtsitz (451, 452, 453) bilden, womit die Aktuatoren verschlossen sind.

12. Hydraulische Steuerungsvorrichtung nach Anspruch 7 und 8, **dadurch gekennzeichnet, dass** der Gehäusekörper eine Welle (512) des Getriebes ist und dass die Anschlüsse (521A, 521B, 521C) der Aktuatoren in der Welle (512) axial bezüglich einer Wellenachse (M) voneinander beabstandet sind, wobei die Stößel (541) unterschiedliche Längen in axialer Richtung ausgehend vom Steuerkolben (516) aufweisen.

13. Hydraulische Steuerungsvorrichtung nach einem der Ansprüche 9 bis 11, **dadurch gekennzeichnet, dass** der Verschlusskörper mehrstückig ausgebildet ist, wobei dieser mehrere zylindrische Schieberabschnitte unterschiedlichen Durchmessers umfasst, die konzentrisch um eine Mittelachse (M) der Welle (312, 412) ineinander geführt und axial gegeneinander verschiebbar sind und zwischen welchen als Druckfedern wirksame elastische Ausgleichselemente angeordnet sind, so dass in der ersten Stellung des Verschlusskörpers jeder Schieberabschnitt unabhängig von den anderen Schieberabschnitten über die Ausgleichselemente an den jeweiligen Dichtsitz (351, 352, 353, 451, 452, 453) gedrückt wird.

14. Hydraulische Steuerungsvorrichtung nach einem der Ansprüche 9 bis 13, **dadurch gekennzeichnet, dass** im Bereich der Dichtsitze (351, 352, 353, 451, 452, 453, 551) an dem Verschlusskörper (311, 411, 511) und/oder dem Gehäusekörper (312, 412, 413, 512) mindestens ein elastisches Dichtelement (361, 363, 365, 461, 462, 463, 561) so angeordnet ist, dass mittels diesem die Abdichtung erfolgt.

15. Automatikgetriebe mit einer hydraulischen Steuerungsvorrichtung (101) nach einem der vorangegangenen Ansprüche.

16. Automatikgetriebe nach Anspruch 15, **dadurch gekennzeichnet, dass** dieses mehrere Schaltelemente aufweist, von welchen mindestens zwei zur Darstellung einer Übersetzungsstufe druckbeaufschlagt geschlossen sind.

17. Automatikgetriebe nach Anspruch 15, **dadurch gekennzeichnet, dass** ein weiteres Schaltelement unter einer Druckbeaufschlagung dessen Aktuators geöffnet ist.

18. Automatikgetriebe nach Anspruch 15, **dadurch gekennzeichnet, dass** dieses mindestens zwei Schaltelemente aufweist, welche unter der Druckbeaufschlagung derer Aktuatoren geöffnet sind.

## Claims

1. Hydraulic control apparatus (101) for actuating a plurality of shifting elements (K_A, K_B, K_C) for the transmission of torque in an automatic transmission, each shifting element having at least one hydraulic actuator (4A, 4B, 4C) which comprises an actuating pressure space (7A, 7B, 7C), by means of the pressurization of which from the hydraulic control apparatus the shifting elements can be actuated, the hydraulic control apparatus (101) comprising at least one switchable shut-off valve (110) and at least one hydraulic switching unit (8) which is connected to a pressure source (2) and has a plurality of pressure actuating devices (23A, 23B, 23C) which are assigned to the different shifting elements, **characterized in that** the shut-off valve (110) is configured and arranged in such a way that the actuators of at least two shifting elements can be connected hydraulically by way of a common shut-off valve (110) to the pressure actuating devices (23A, 23B, 23C), all actuating pressure spaces (7A, 7B, 7C) of the at least two shifting elements (K_A, K_B, K_C) being closed tightly by the shut-off valve (110) in a first switching position of the shut-off valve (110), and all actuating pressure spaces (7A, 7B, 7C) of the at least two shifting elements (K_A, K_B, K_C) being connected by way of the shut-off valve (110) to the pressure actuating device (23A, 23B, 23C) which is assigned to the respective shifting element (K_A, K_B, K_C) in a second shifting position of the shut-off valve (110).

2. Hydraulic control apparatus according to Claim 1, **characterized in that** the shut-off valve (110) comprises a closure body (311, 411, 511) and a housing body (312, 412, 413, 512), the closure body being arranged within the housing body, and the housing body having at least one connector (21A, 21B, 21C) to each actuator of the at least two shifting elements and at least one connector (25A, 25B, 25C) to the pressure actuating device (23A, 23B, 23C) which is assigned to the respective one of the at least two shifting elements, it being possible for the closure body to be moved relative to the housing body into a first and a second position by means of an active energy, each of the actuators which are connected to the shut-off valve (110, 310, 410, 510) being closed in the first position, and the actuators of the at least two shifting elements being connected by way of the closure body in each case to the pressure actuating device which is assigned to the respective shifting element in the second position of the closure body.

3. Hydraulic control apparatus according to Claim 2, **characterized in that** the housing body has a control pressure connector (324, 424, 524), and **in that** the active energy for moving the closure body (311, 411, 511) into one of the two positions is a hydraulic control pressure (p_S) which loads the closure body and can be set by the hydraulic switching unit, and **in that** the active energy for moving the closure body into the other of the two positions is a prestressing force of a spring (331, 431, 531), in the case of a control pressure which is lowered correspondingly by means of the hydraulic switching unit.

4. Hydraulic control apparatus according to Claim 3, **characterized in that** the closure body (311, 411, 511) can be moved into the second position under the action of the control pressure (p_S), and can be moved into the first position under the action of the prestressing force of the spring (331, 431, 531), in the case of a correspondingly lowered control pressure.

5. Hydraulic control apparatus according to one of Claims 2 to 4, **characterized in that** the closure body is a cylindrical piston valve (311), the piston valve (311) being arranged displaceably within the housing body (312).

6. Hydraulic control apparatus according to one of Claims 2 to 4, **characterized in that** the closure body is a hollow-cylindrical sleeve valve (411), and the housing body consists of a shaft (412) of the transmission and a transmission housing part (413) which encloses the shaft concentrically, the sleeve valve (411) being arranged concentrically with respect to the shaft (412) and therefore also with respect to the transmission housing part (413) between the two, such that it can be displaced axially relative to the latter.

7. Hydraulic control apparatus according to one of Claims 2 to 4, **characterized in that** a closure body (511) comprises a plurality of tappets (541) which are connected to a control piston (516), can be moved by way of the latter, and are arranged axially displaceably within the housing body (512), the number of tappets corresponding at least to the number of connected actuators.

8. Hydraulic control apparatus according to one of Claims 5 to 7, **characterized in that** the shut-off valve (310, 410, 510) is configured as a switchable seat valve.

9. Hydraulic control apparatus according to Claim 8 and according to Claim 5 or 6, **characterized in that** the piston valve (311) is configured as a step piston which has a plurality of piston sections (341, 342, 343, 344), the respective external diameters of which are different and increase in a step-like manner from one to the other end of the piston valve, the piston valve (311) having at least as many piston sections of different diameter as actuators which are connected to the shut-off valve, and the piston valve (311) being guided in an axially directed stepped bore (314) which is configured in the housing body (312) and has a plurality of bore sections (355, 356, 357, 358) of different internal diameter as a counter-contour with respect to the step piston, it being possible for the piston valve (311) to be displaced in the stepped bore (314) to such an extent until the shoulders between two piston sections bear against one another at the corresponding shoulders of the bore sections and therefore form in each case one sealing seat (351, 352, 353), which corresponds to the first position of the piston valve (311), and whereby the actuators are closed.

10. Hydraulic control apparatus according to Claim 5 or 9, **characterized in that** the housing body is a shaft (312) of the transmission, the piston valve (311) being arranged within the shaft such that it can be displaced in the axial direction of the shaft (312).

11. Hydraulic control apparatus according to Claims 6 and 8, **characterized in that** an inner contour of the sleeve valve (411) is configured as a stepped bore (414) and has a plurality of sleeve sections (441, 442, 443, 444) of different internal diameter, the sleeve valve (411) being guided axially on an outer contour of the shaft (412) which likewise has a plurality of shaft sections (475, 476, 477, 478) of different diameter as a counter-contour, the sleeve valve (411) having at least as many sleeve sections (441, 442, 443, 444) of different diameter as connected actuators, and it being possible for the sleeve valve (411) to be displaced on the step-shaped shaft (412) to such an extent until the shoulders between the sleeve sections (441, 442, 443, 444) of different diameter bear against one another at the corresponding shoulders of the shaft sections (475, 476, 477, 478) and therefore form a stop position in accordance with the first position and in each case one sealing seat (451, 452, 453), whereby the actuators are closed.

12. Hydraulic control apparatus according to Claims 7 and 8, **characterized in that** the housing body is a shaft (512) of the transmission, and **in that** the connectors (521A, 521B, 521C) of the actuators in the shaft (512) are spaced apart from one another axially with regard to a shaft axis (M), the tappet (541) having different lengths in the axial direction, starting from the control piston (516).

13. Hydraulic control apparatus according to one of Claims 9 to 11, **characterized in that** the closure body is configured in multiple pieces, the said closure body comprising a plurality of cylindrical valve sections of different diameter which are guided inside one another concentrically about a centre axis (M) of the shaft (312, 412), can be displaced axially against one another, and between which elastic compensation elements which act as compression springs are arranged, with the result that, in the first position of the closure body, each valve section is pressed via the compensation elements onto the respective sealing seat (351, 352, 353, 451, 452, 453) independently of the other valve sections.

14. Hydraulic control apparatus according to one of Claims 9 to 13, **characterized in that** at least one elastic sealing element (361, 363, 365, 461, 462, 463, 561) is arranged in the region of the sealing seats (351, 352, 353, 451, 452, 453, 551) on the closure body (311, 411, 511) and/or the housing body (312, 412, 413, 512), in such a way that the sealing action takes place by means of the said elastic sealing element (361, 363, 365, 461, 462, 463, 561) .

15. Automatic transmission having a hydraulic control apparatus (101) according to one of the preceding claims.

16. Automatic transmission according to Claim 15, **characterized in that** it has a plurality of shifting elements, of which at least two are closed in a pressurized manner in order to produce a transmission stage.

17. Automatic transmission according to Claim 15, **characterized in that** a further shifting element is open under a pressurization of its actuator.

18. Automatic transmission according to Claim 15, **characterized in that** it has at least two shifting elements which are open under the pressurization of their actuators.

## Revendications

1. Dispositif de commande hydraulique (101) pour la commande de plusieurs éléments de commutation (K_A, K_B, K_C) pour la transmission de couples de rotation dans une transmission automatique, dans lequel chaque élément de commutation présente au moins un actionneur hydraulique (4A, 4B, 4C), qui comprend une chambre de pression d'actionnement (7A, 7B, 7C), dont la mise sous pression à partir du dispositif de commande hydraulique permet d'actionner les éléments de commutation, dans lequel le dispositif de commande hydraulique (101) comprend au moins une vanne d'arrêt commutable (110) et au moins un appareil de commutation hydraulique (8) relié à une source de pression (2) avec plusieurs dispositifs de réglage de pression (23A, 23B, 23C) associés aux différents éléments de commutation, **caractérisé en ce que** la vanne d'arrêt (110) est configurée et disposée de telle manière que les actionneurs d'au moins deux éléments de commutation puissent être reliés hydrauliquement aux dispositifs de réglage de pression (23A, 23B, 23C) par une vanne d'arrêt commune (110), dans lequel dans une première position de commutation de la vanne d'arrêt (110) toutes les chambres de pression d'actionnement (7A, 7B, 7C) desdits au moins deux éléments de commutation (K_A, K_B, K_C) sont fermées de façon étanche par la vanne d'arrêt (110), et dans une deuxième position de commutation de la vanne d'arrêt (110) toutes les chambres de pression d'actionnement (7A, 7B, 7C) desdits au moins deux éléments de commutation (K_A, K_B, K_C) sont reliées par la vanne d'arrêt (110) au dispositif de réglage de pression (23A, 23B, 23C) associé à l'élément de commutation respectif (K_A, K_B, K_C).

2. Dispositif de commande hydraulique selon la revendication 1, **caractérisé en ce que** la vanne d'arrêt (110) comprend un corps de fermeture (311, 411, 511) et un corps de boîtier (312, 412, 413, 512), dans lequel le corps de fermeture est disposé à l'intérieur du corps de boîtier et le corps de boîtier présente au moins un raccord (21A, 21B, 21C) vers chaque actionneur desdits au moins deux éléments de commutation et au moins un raccord (25A, 25B, 25C) vers le dispositif de réglage de pression (23A, 23B, 23C) associé respectivement à un desdits au moins deux éléments de commutation, dans lequel le corps de fermeture est déplaçable au moyen d'une énergie active par rapport au corps de boîtier dans une première et dans une deuxième position, dans lequel dans la première position chacun des actionneurs raccordés à la vanne d'arrêt (110, 310, 410, 510) est fermé et dans la deuxième position du corps de fermeture les actionneurs desdits au moins deux éléments de commutation sont reliés par le corps de fermeture respectivement au dispositif de réglage de pression associé à l'élément de commutation respectif.

3. Dispositif de commande hydraulique selon la revendication 2, **caractérisé en ce que** le corps de boîtier présente un raccord de pression de commande (324, 424, 524) et **en ce que** l'énergie active pour déplacer le corps de fermeture (311, 411, 511) dans une des deux positions est une pression de commande hydraulique (p_S) agissant sur le corps de fermeture, qui est réglable au moyen de l'appareil de commutation hydraulique, et **en ce que** l'énergie active pour déplacer le corps de fermeture dans l'autre des deux positions est une force de précontrainte d'un ressort (331, 431, 531), avec une pression de commande abaissée de façon correspondante au moyen de l'appareil de commutation hydraulique.

4. Dispositif de commande hydraulique selon la revendication 3, **caractérisé en ce que** le corps de fermeture (311, 411, 511) est déplaçable sous l'action de la pression de commande (p_S) dans la deuxième position, et sous l'action de la force de précontrainte du ressort (331, 431, 531) dans la première position, avec une pression de commande abaissée de façon correspondante.

5. Dispositif de commande hydraulique selon l'une quelconque des revendications 2 à 4, **caractérisé en ce que** le corps de fermeture est un tiroir à piston cylindrique (311), dans lequel le tiroir à piston (311) est disposé de façon coulissante à l'intérieur du corps de boîtier (312).

6. Dispositif de commande hydraulique selon l'une quelconque des revendications 2 à 4, **caractérisé en ce que** le corps de fermeture est un tiroir à douille cylindrique (411) et le corps de boîtier se compose d'un arbre (412) de la transmission et d'une partie de boîtier de transmission (413) entourant l'arbre de façon concentrique, dans lequel le tiroir à douille (411) est déplaçable axialement de façon concentrique à l'arbre (412) et dès lors aussi à la partie de boîtier de transmission (413) entre les deux par rapport à ceux-ci.

7. Dispositif de commande hydraulique selon l'une quelconque des revendications 2 à 4, **caractérisé en ce qu'**un corps de fermeture (511) comprend plusieurs poussoirs (541) reliés à un piston de commande (516) et déplaçables par celui-ci, qui sont disposés de façon coulissante à l'intérieur du corps de boîtier (512), dans lequel le nombre des poussoirs correspond au moins au nombre des actionneurs connectés.

8. Dispositif de commande hydraulique selon l'une quelconque des revendications 5 à 7, **caractérisé en ce que** la vanne d'arrêt (310, 410, 510) est réalisée sous forme de vanne à siège commutable.

9. Dispositif de commande hydraulique selon la revendication 8 et selon la revendication 5 ou 6, **caractérisé en ce que** le tiroir à piston (311) est réalisé sous forme de piston étagé, qui présente plusieurs sections de piston (341, 342, 343, 344), dont les diamètres extérieurs respectifs sont différents et augmentent de façon étagée d'une extrémité à l'autre du tiroir à piston, dans lequel le tiroir à piston (311) présente au moins autant de sections de piston de diamètre différent que d'actionneurs reliés à la vanne d'arrêt, et dans lequel le tiroir à piston (311) est guidé dans un alésage étagé (314) orienté axialement formé dans le corps de boîtier (312), qui présente comme contour opposé au piston de commande plusieurs sections d'alésage (355, 356, 357, 358) de diamètre intérieur différent, dans lequel le tiroir à piston (311) est déplaçable dans l'alésage étagé (314), jusqu'à ce que les épaulements entre deux sections de piston s'appliquent l'un sur l'autre aux épaulements correspondants des sections d'alésage et forment ainsi respectivement un siège étanche (351, 352, 353), ce qui correspond à la première position du tiroir à piston (311) et avec lequel les actionneurs sont fermés.

10. Dispositif de commande hydraulique selon la revendication 5 ou 9, **caractérisé en ce que** le corps de boîtier est un arbre (312) de la transmission, dans lequel le tiroir à piston (311) est disposé à l'intérieur de l'arbre de façon coulissante en direction axiale de l'arbre (312).

11. Dispositif de commande hydraulique selon la revendication 6 et 8, **caractérisé en ce qu'**un contour intérieur du tiroir à douille (411) est réalisé sous forme d'alésage étagé (414) et présente plusieurs sections de douille (441, 442, 443, 444) de diamètre intérieur différent, dans lequel le tiroir à douille (411) est guidé axialement sur un contour extérieur de l'arbre (412) présentant également plusieurs sections d'arbre (475, 476, 477, 478) de diamètre différent en tant que contour opposé, dans lequel le tiroir à douille (411) présente au moins autant de sections de douille (441, 442, 443, 444) de diamètre différent que d'actionneurs connectés, et dans lequel le tiroir à douille (411) est déplaçable sur l'arbre étagé (412), jusqu'à ce que les épaulements entre les sections de douille (441, 442, 443, 444) de diamètre différent s'appliquent l'un sur l'autre aux épaulements correspondants des sections d'arbre (475, 476, 477, 478) et forment ainsi une position de butée correspondant à la première position ainsi que chaque fois un siège étanche (451, 452, 453) avec lequel les actionneurs sont fermés.

12. Dispositif de commande hydraulique selon la revendication 7 et 8, **caractérisé en ce que** le corps de boîtier est un arbre (512) de la transmission et **en ce que** les raccords (521A, 521B, 521C) des actionneurs sont disposés dans l'arbre (512) axialement à distance l'un de l'autre par rapport à un axe d'arbre (M), dans lequel les poussoirs (541) présentent des longueurs différentes en direction axiale à partir du piston de commande (516).

13. Dispositif de commande hydraulique selon l'une quelconque des revendications 9 à 11 ou la revendication, **caractérisé en ce que** le corps de fermeture est réalisé en plusieurs parties, dans lequel celui-ci comprend plusieurs sections de tiroir cylindriques de diamètre différent, qui sont guidées l'une dans l'autre de façon concentrique à un axe central (M) de l'arbre (312, 412) et sont déplaçables axialement l'une contre l'autre, entre lesquelles sont disposés des éléments de compensation élastiques sous forme de ressort de compression, de telle manière que dans la première position du corps de fermeture chaque section de tiroir soit poussée indépendamment des autres sections de tiroir par les éléments de compensation sur le siège étanche respectif (351, 352, 353, 451, 452, 453).

14. Dispositif de commande hydraulique selon l'une quelconque des revendications 9 à 13, **caractérisé en ce qu'**au moins un élément d'étanchéité élastique (361, 363, 365, 461, 462, 463, 561) est disposé dans la région des sièges étanches (351, 352, 353, 451, 452, 453, 551) sur le corps de fermeture (311, 411, 511) et/ou sur le corps de boîtier (312, 412, 413, 512), de telle manière que l'étanchéité soit assurée par celui-ci.

15. Transmission automatique avec un dispositif de commande hydraulique (101) selon l'une quelconque des revendications précédentes.

16. Transmission automatique selon la revendication 15, **caractérisée en ce que** celle-ci présente plusieurs éléments de commutation, parmi lesquels au moins deux sont fermés sous l'action de la pression pour représenter un étage de transmission.

17. Transmission automatique selon la revendication 15, **caractérisée en ce qu'**un autre élément de commutation est ouvert sous l'action de la pression de son actionneur.

18. Transmission automatique selon la revendication 15, **caractérisée en ce que** celle-ci présente au moins deux éléments de commutation, qui sont ouverts sous l'action de la pression de leurs actionneurs.
